# EUROPEAN PATENT APPLICATION

(11) **EP 4 718 869 A1**
(43) Date of publication of application: **01.04.2026**
(21) Application number: 24897822.3
(22) Date of filing: 30.08.2024
(51) Int. Cl.: H04R 5/02, H04S 7/00, H04S 3/00, G03B 21/00

(54) **ELECTRONIC DEVICE AND CONTROL METHOD THEREFOR**

(30) Priority: 28.11.2023 KR 20230168510
(71) Applicant: Samsung Electronics Co., Ltd., Suwon-si, Gyeonggi-do 16677 (KR)
(72) Inventor: JANG, Yongseok, Suwon-si Gyeonggi-do 16677 (KR); KIM, Dongyoon, Suwon-si Gyeonggi-do 16677 (KR); KIM, Sungjoo, Suwon-si Gyeonggi-do 16677 (KR); KIM, Jongbae, Suwon-si Gyeonggi-do 16677 (KR); WEY, Hoseok, Suwon-si Gyeonggi-do 16677 (KR); LEE, Kisung, Suwon-si Gyeonggi-do 16677 (KR); LEE, Yoonjae, Suwon-si Gyeonggi-do 16677 (KR); LIM, Donghyun, Suwon-si Gyeonggi-do 16677 (KR); CHUNG, Woosung, Suwon-si Gyeonggi-do 16677 (KR)
(74) Representative: Appleyard Lees IP LLP
(86) International application number: PCT/KR2024/013089
(87) International publication number: WO 2025/116221

(57) **Abstract**

An electronic apparatus includes memory, a communication interface, a projector configured to output a projection image, and at least one processor, and the at least one processor is configured to identify a second location of a user with reference to a first location of the electronic apparatus, identify the number of terminal devices connectable to the electronic apparatus, identify a target location to place the terminal devices based on the first location, the second location and the number of terminal devices, and provide guide information to guide the terminal devices to be placed on the target location.

## Description

### [Technical Field]

The present disclosure relates to an electronic apparatus and a controlling method thereof, and more particularly, to an electronic apparatus that guides a placement location of a terminal device connected to the electronic apparatus and a controlling method thereof.

### [Background Art]

An electronic apparatus providing an audio signal may be coupled to a plurality of external devices. The external devices may be devices including speakers. The electronic apparatus may configure an audio environment by using the plurality of external devices. The external devices may represent fixed speakers or movable speakers.

In order to configure an audio environment in a variety of spaces, not just in fixed locations, an electronic apparatus can serve as a reference. In order to configure an audio environment using a plurality of external devices, it is necessary to understand the audio performance of the external devices.

It can be inconvenient for a user to configure an audio environment by directly determining whether the external devices include speakers or whether the performance of the speakers included in the external device is sufficient to provide the desired audio.

The quality of the audio environment can vary depending on where the external devices are placed. The placement of the external devices can be important if the user is listening to the audio signal. If the user randomly specifies the placement location, the quality of the audio environment may deteriorate.

### [Detailed Description of the Disclosure]

### [Technical Solution]

The present disclosure is conceived address the above-mentioned problem, and is to provide an electronic apparatus that automatically determine and guide the placement location of terminal devices connectable to the electronic apparatus and a controlling method thereof.

An electronic apparatus according to an embodiment includes memory storing one or more instructions, a communication interface, a projector configured to output a projection image, and at least one processor operatively coupled to the memory and configured to execute the one or more instructions stored in the memory, and the at least one processor is configured to identify a second location of a user with reference to a first location of the electronic apparatus, identify the number of terminal devices connectable to the electronic apparatus, identify a target location to place the terminal devices based on the first location, the second location and the number of terminal devices, and provide guide information to guide the terminal devices to be placed on the target location.

The at least one processor may be configured to, based on the terminal devices being placed on the target location, control the communication interface to transmit audio information including an audio signal to be output from the terminal devices to the terminal devices, and control the projector to output a projection image corresponding to the audio signal.

The at least one processor may be configured to, based on the terminal devices being placed on the target location, control the communication interface to transmit audio information including an audio signal to be output from the terminal devices to the terminal devices.

The apparatus may further include a microphone, the preset audio volume may be a first audio volume, the audio setting may be a first audio setting, the audio information may be first audio information, and the at least one processor may be configured to obtain audio data recording the audio signal output from the terminal devices through the microphone, change the first audio volume to a second audio volume based on the audio data, and control the communication interface to transmit second audio information including second audio setting to output the audio signal at a second audio volume to the terminal devices.

The apparatus may further include a microphone, the target location may be a first target location, the guide information may be first guide information, and the at least one processor may be configured to obtain audio data recording the audio signal output from the terminal devices through the microphone, change the first target location to a second target location based on the audio data, and provide second guide information to guide the terminal devices to be placed on the second target location.

The at least one processor may be configured to, based on there being one terminal devices, identify an imaginary first straight line connecting the second location and the first location, and identify a location distant from the second location by a first distance between the first location and the second location within the first straight line as a target location.

The at least one processor is configured to identify a third location of a projection area to output a projection image with reference to the first location, and based on there being a plurality of candidate locations having a distance that is farthest the second location by the first distance within the first straight line, identify a candidate location distant further from the third location among the plurality of candidate locations as the target location.

The at least one processor may be configured to, based on there being two terminal devices, identify an imaginary first straight line connecting the second location and the first location, identify an imaginary second straight line perpendicular to the first straight line, and identify a plurality of locations distant from the second location by the first distance between the first location and the second location within the second straight line as target locations.

The at least one processor may be configured to generate an audio signal corresponding to the target location, and control the communication interface to transmit audio information including the audio signal to the terminal devices, and the audio signal may be a multi-channel audio signal.

The at least one processor may be configured to generate audio setting corresponding to the target location, and control the communication interface to transmit audio information including the audio setting to the terminal devices, and the audio setting may be Equalizer (EQ) setting.

A controlling method of an electronic apparatus according to an embodiment includes identifying a second location of a user with reference to a first location of the electronic apparatus, identifying the number of terminal devices connectable to the electronic apparatus, identifying a target location to place the terminal devices based on the first location, the second location and the number of terminal devices, and providing guide information to guide the terminal devices to be placed on the target location.

The method may further include, based on the terminal devices being placed on the target location, transmitting audio information including an audio signal to be output from the terminal devices to the terminal devices, and outputting a projection image corresponding to the audio signal.

The transmitting audio information may include, based on the terminal devices being placed on the target location, transmitting the audio information including the audio signal and audio setting to output the audio signal at a preset audio volume to the terminal devices.

The preset audio volume may be a first audio volume, the audio setting may be a first audio setting, and the audio information may be first audio information, and the controlling method may include obtaining audio data recording the audio signal output from the terminal devices, changing the first audio volume to a second audio volume based on the audio data, and transmitting second audio information including second audio setting to output the audio signal at a second audio volume to the terminal devices.

The target location may be a first target location, and the guide information may be first guide information, and the controlling method may include obtaining audio data recording the audio signal output from the terminal devices, changing the first target location to a second target location based on the audio data, and providing second guide information to guide the terminal devices to be placed on the second target location.

### [Brief Description of Drawings]

FIG. 1 is an illustration of an example audio environment including an electronic apparatus and a terminal device according to one or more embodiments;
FIG. 2 is a block diagram illustrating an electronic apparatus according to one or more embodiments;
FIG. 3 is a block diagram provided to explain specific configuration of the electronic apparatus of FIG. 2 according to one or more embodiments;
FIG. 4 is an illustration of an example an operation of guiding a target location of a terminal device according to one or more embodiments;
FIG. 5 is an illustration of an operation of providing audio information to a terminal device according to one or more embodiments;
FIG. 6 is an illustration of an example operation of identifying the number of terminal devices according to one or more embodiments;
FIG. 7 is an illustration of an example operation of providing information regarding connectable terminal devices according to one or more embodiments;
FIG. 8 is an illustration of an example operation of providing a target location of a terminal device according to one or more embodiments;
FIG. 9 is an illustration of an operation of providing a target location of a terminal device according to one or more embodiments;
FIG. 10 is an illustration of an example operation of providing information regarding audio setting according to one or more embodiments;
FIG. 11 is an illustration of an example operation of identifying a target location using a location of a terminal device according to one or more embodiments;
FIG. 12 is an illustration of an example operation of identifying a target location using performance information of a terminal device according to one or more embodiments;
FIG. 13 illustrates example performance information according to one or more embodiments;
FIG. 14 is an illustration of an example operation of changing audio setting by recording an audio signal according to one or more embodiments;
FIG. 15 is an illustration of an example operation of changing a target location by recording an audio signal according to one or more embodiments;
FIG. 16 an illustration of an example operation of providing a target location of a plurality of terminal devices according to one or more embodiments;
FIG. 17 is an illustration of an example operation of providing a target location of a plurality of terminal devices according to one or more embodiments;
FIG. 18 is an illustration of an example target location of one terminal device according to one or more embodiments;
FIG. 19 is an illustration of an example target location of one terminal device according to one or more embodiments;
FIG. 20 is an illustration of an example target location of two terminal devices according to one or more embodiments;
FIG. 21 is an illustration of an example target location of two terminal devices according to one or more embodiments;
FIG. 22 is an illustration of an example target location of two terminal devices according to one or more embodiments;
FIG. 23 is an illustration of an example target location of two terminal devices according to one or more embodiments;
FIG. 24 is an illustration of an example target location of three terminal devices according to one or more embodiments;
FIG. 25 is an illustration of an example target location of three terminal devices according to one or more embodiments;
FIG. 26 is an illustration of an example target location of three terminal devices according to one or more embodiments; and
FIG. 27 is an illustration of an example controlling method of an electronic apparatus according to one or more embodiments.

### [Detailed Description of Embodiments]

Hereinafter, the present disclosure will be described in detail with reference to the accompanying drawings.

General terms that are currently widely used are selected as the terms used in the embodiments of the disclosure in consideration of their functions in the disclosure, but may be changed based on the intention of those skilled in the art or a judicial precedent, the emergence of a new technique, or the like. In addition, in a specific case, terms arbitrarily chosen by an applicant may exist. In this case, the meanings of such terms are mentioned in detail in the corresponding descriptions of the disclosure. Therefore, the terms used in the embodiments of the disclosure need to be defined on the basis of the meanings of the terms and the overall contents throughout the disclosure rather than simple names of the terms.

In the disclosure, an expression "have", "may have", "include", "may include" or the like, indicates the existence of a corresponding feature (e.g., a numerical value, a function, an operation or a component such as a part), and does not exclude the existence of an additional feature.

An expression, "at least one of A or/and B" should be understood as indicating any one of "A", "B" and "both of A and B."

Expressions "1st", "2nd", "first", "second", and the like, used in the disclosure may indicate various components regardless of the sequence and/or importance of the components. These expressions are used only to distinguish one component from another component, and do not limit the corresponding components.

When it is described that an element (e.g., a first element) is referred to as being "(operatively or communicatively) coupled with/to" or "connected to" another element (e.g., a second element), it should be understood that it may be directly coupled with/to or connected to the other element, or they may be coupled with/to or connected to each other through an intervening element (e.g., a third element).

A term of a singular number may include its plural number unless explicitly indicated otherwise in the context. It is to be understood that a term "include", "formed of", or the like used in the application specifies the presence of features, numerals, steps, operations, components, parts, or combinations thereof, mentioned in the specification, and does not preclude the presence or addition of one or more other features, numerals, steps, operations, components, parts, or combinations thereof.

In the disclosure, a "module" or a "unit" may perform at least one function or operation, and be implemented by hardware or software or be implemented by a combination of hardware and software. In addition, a plurality of "modules" or a plurality of "units" may be integrated into at least one module and be implemented by at least one processor (not shown) except for a 'module' or a 'unit' that needs to be implemented by specific hardware.

In this specification, a term 'user' may refer to a person using an electronic apparatus or a device using an electronic apparatus (e.g., an artificial intelligence electronic apparatus).

Hereinafter, one or more embodiments of the present disclosure will be described in greater detail with reference to the accompanying drawings.

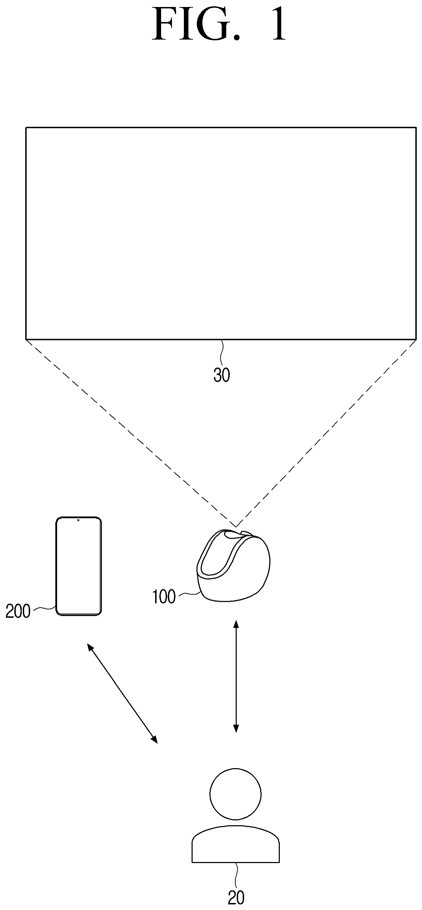

FIG. 1 is a view provided to explain an audio environment including an electronic apparatus 100 and a terminal device 200 according to one or more embodiments.

Referring to FIG. 1, the electronic apparatus 100 may represent a device that outputs a projection image. For example, the electronic apparatus 100 may include a projector. The above limitations are only one embodiment, and the electronic apparatus 100 may be implemented as a various devices.

The terminal device 200 may represent a device that includes a speaker. For example, the terminal device 200 may include smartphone, tablet, sound bar, AI speaker, or any other suitable device known to one of ordinary skill in the art. The terminal device 200 may be described as an external device, a device including a speaker, an audio output device, or any other external device known to one of ordinary skill in the art. While FIG. 1 illustrates one terminal device 200, this is only an example, and the terminal device 200 may be implemented as a plurality of terminal devices. Furthermore, as understood by one or ordinary skill in the art, when there are a plurality of terminal devices, the terminal devices may be of a different type (e.g., smart phone, tablet, watch, etc.).

The electronic apparatus 100 may output content such as digital content. The content may include image signals and audio signals. The electronic apparatus 100 may output an image signal via a projector 111. The image signal may include a projection image. The electronic apparatus 100 may output the projection image to a projection area 30.

The electronic apparatus 100 may provide an audio signal included in the content to a user 20.

In one or more examples, the electronic apparatus 100 may output an audio signal through a speaker included in the electronic apparatus 100.

In one or more examples, the electronic apparatus 100 may output an audio signal through the terminal device 200 connected to the electronic apparatus 100. The electronic apparatus 100 may transmit audio information including the audio signal to the terminal device 200. The terminal device 200 may receive the audio information from the electronic apparatus 100. The terminal device 200 may obtain the audio signal included in the audio information, and the terminal device 200 may output the audio signal included in the audio information through a speaker included in the terminal device 200.

In one or more examples, the electronic apparatus 100 may output an audio signal via a speaker included in the electronic apparatus 100 and a speaker included in the terminal device 200.

In one or more examples, the audio signal may be associated with a haptic effect or haptic feedback. For example, the haptic effect may include one or more tactile sensations produced by electro-mechanical devices to create vibrations. These vibrations may be controlled in terms of frequency and interval to create sensations. The haptic effect may be output simultaneously with the audio signal. In one or more examples, when a terminal device 200 receives an audio signal, the audio signal may be associated with an instruction that causes the terminal device to output a haptic effect simultaneously with audio associated with the audio signal.

When an audio signal is output through the terminal device 200, the electronic apparatus 100 may guide the location of the terminal device 200. Depending on where the terminal device 200 is located, the characteristics of the audio signal perceived by the user may vary.

The characteristics of an audio signal may represent the size (or volume) of the audio signal, the channel of the audio signal (indicating which channel out of multiple channels it corresponds to such as left or right channel of a speaker), the frequency band of the audio signal, or any other suitable audio characteristics known to one of ordinary skill in the art.

When information guiding the location of the terminal device 200 is provided to the user, the user may easily place the terminal device 200 in a specific location. The user may experience an audio environment that suits the user.

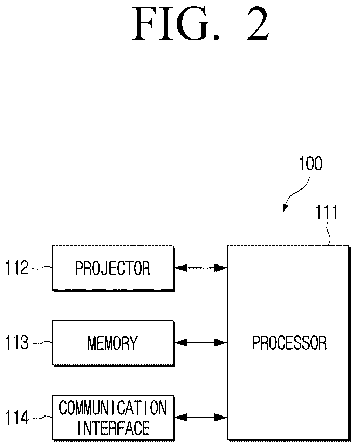

FIG. 2 is a block diagram illustrating the electronic apparatus 100 according to one or more embodiments.

The electronic apparatus 100 may include at least one of memory 113, a communication interface 114, a projector 112 that outputs a projection image, or at least one processor 111.

The at least one processor 111 may perform overall control operations of the electronic apparatus 100. The at least one processor 111 may perform the function of controlling the overall operations of the electronic apparatus 100.

The projector 112 may be configured to project an image (projection image, content, etc.) to the outside. A specific description of the projector 112 is provided in FIG. 2.

The memory 113 may store a projection image that is projected through the projector 112. The projection image may refer to a still image as well as a continuous image (or video). The projection image may be an image included in the content. The memory 113 may store an operating system (O/S). The memory 113 may store content including audio signals. The content may include an audio signal and an image signal mapped to the audio signal. The image signal may be output to the projector 112 as a projection image.

The communication interface 114 may connect the terminal device 200 and the electronic apparatus 100.

According to one or more embodiments, the at least one processor 111 may identify a first location P1 of the electronic apparatus 100, a second location P2 of the user, identify the number of terminal device 200 connectable to the electronic apparatus 100, identify a target location for placing the terminal device 200 based on the first location P1, the second location P2, and the number of terminal device 200, and provide guide information to guide the terminal device 200 to be placed on the target location. The guide information may be in the form of digital text displayed on a screen of the terminal device 200 or audio data output from the terminal device 200.

The target location may represent a location to place the terminal device 200. The at least one processor 111 may determine a plurality of candidate locations to place the terminal device 200. The at least one processor 111 may determine one location among the plurality of candidate locations as the target location. The target location may be described as a final target location, a final location, or any other suitable location known to one of ordinary skill in the art. In one or more examples, the target location may be location that is determined to be optimal for providing an audio effect (e.g., surround sound environment). In one or more examples, the target location may be location that is determined to have the least amount of noise or interference in a surrounding environment.

The at least one processor 111 may identify the first location P1 of the electronic apparatus 100. The at least one processor 111 may identify the second location P2 of the user 20.

In one or more examples, the at least one processor 111 may identify the first location P1 of the electronic apparatus 100 as an origin or reference point. The at least one processor 111 may obtain (or identify) the second location P2, or any other suitable location, as a location relative to the first location P1. Various locations other than the first location P1 and the second location P2 may be obtained in the same manner.

The at least one processor 111 may identify the second location P2 with reference to the first location P1. The first location P1 may be an origin or a reference point in spatial coordinates. The at least one processor 111 may obtain relative coordinate information for the second location P2 with reference to the first location P1.

The at least one processor 111 may obtain a captured image of the user via an image sensor (e.g., a camera). The at least one processor 111 may identify the user 20 based on the captured image. The at least one processor 111 may identify a location of the user 20 as a second location based on the captured image. In one or more examples, a location of a user may be obtained using locations information of an associated terminal device. In one or more examples, a location of a user may be determined using one or more wireless signaling techniques such as infrared location tracking.

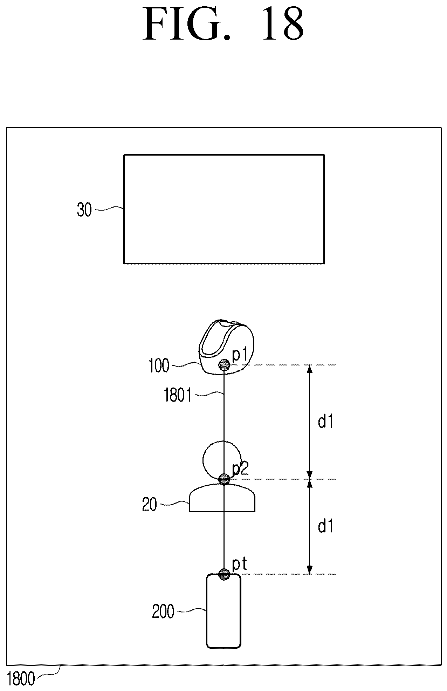

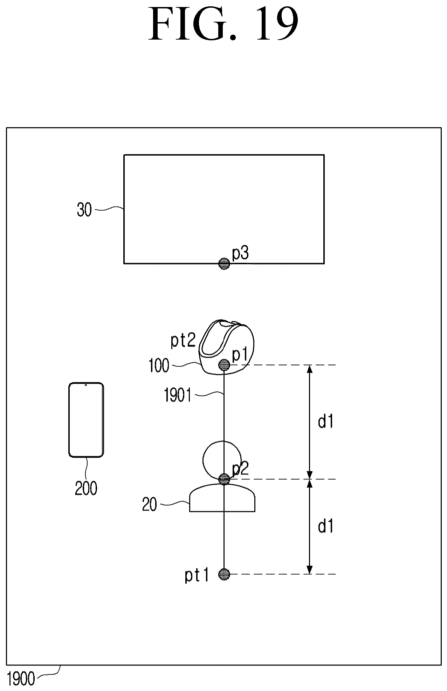

Specific examples of calculating the first location P1 and the second location P2 are shown in FIGS. 18 and 19.

In one or more examples, the at least one processor 111 may obtain absolute spatial coordinates, and identify the first location P1, the second location P2, and any other suitable location based on the spatial coordinates. Various locations other than the first location P1 and the second location P2 may be obtained in the same manner.

The at least one processor 111 may identify a device to configure an audio environment. The at least one processor 111 may identify the terminal device 200 to configure the audio environment. The device configuring the audio environment may represent a device that outputs audio signals associated with content output by the electronic apparatus 100. The at least one processor 111 may control the projector 112 to output image signals (or image information) included in the content. The at least one processor 111 may control the terminal device 200 to output audio signals (or audio information) included in the content. The device configuring the audio environment may include a speaker for outputting audio signals.

The at least one processor 111 may identify devices that are connectable to the electronic apparatus 100 to identify devices to configure an audio environment. In one or more examples, the at least one processor 111 may transmit a request packet for a communication connection to the peripheral device via the communication interface 114. The request packet may be a communication packet. The method through which the request packet is transmitted may be a broadcasting method. The broadcasting method may include the method of releasing communication packets to the surrounding space without setting a target device.

After transmitting a request packet for a communication connection, the at least one processor 111 may receive a response packet corresponding to the request packet from the terminal device 200. The at least one processor 111 may identify the terminal device 200 based on the response packet.

The at least one processor 111 may specify the terminal device 200 by analyzing identification information of the device included in the response packet. The identification information may include at least one of a model name of the device or a name of the device. For example, the response packet may specify a model no. or serial no. associated with the terminal device 200, where the processor 111 may reference a database to determine whether the identified model no. or serial no. is connectable to the electronic apparatus 100. The at least one processor 111 may identify the number of terminal device 200 that are connectable to the electronic apparatus 100 based on the number (or type) of response packets received. The terminal device 200 may include one or more terminal devices.

The at least one processor 111 may select a target device for configuring an audio environment among a plurality of connectable terminal devices. The target device may represent a terminal device that is determined (or identified) to configure an audio environment among the plurality of connectable terminal devices. The at least one processor 111 may identify the number of terminal devices capable of outputting audio signals among the terminal devices connectable to the electronic apparatus 100. The at least one processor 111 may identify the number of terminal devices that include a speaker among the terminal devices connectable to the electronic apparatus 100.

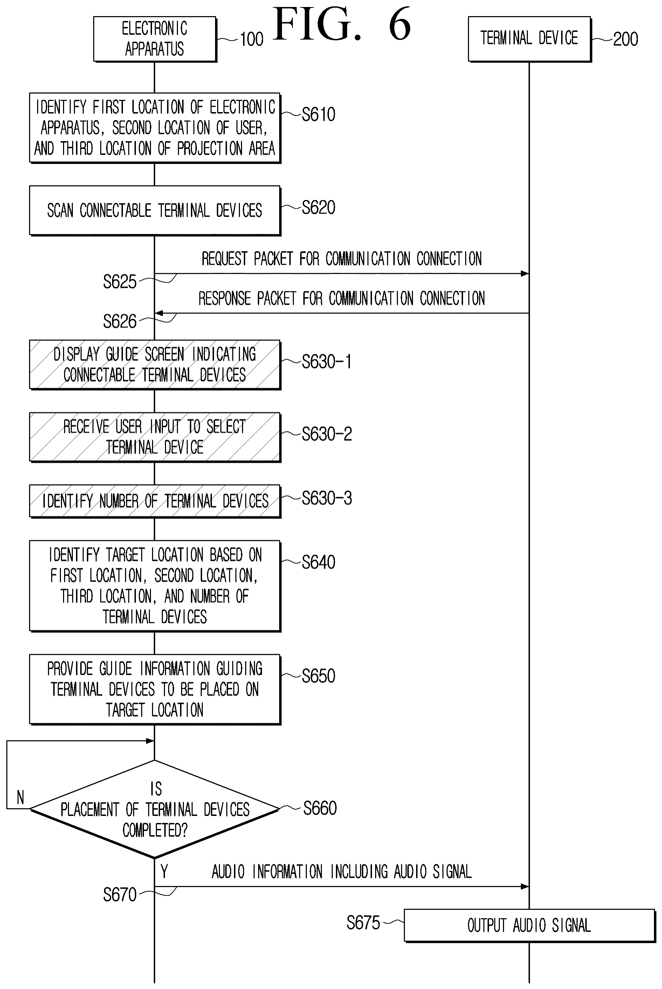

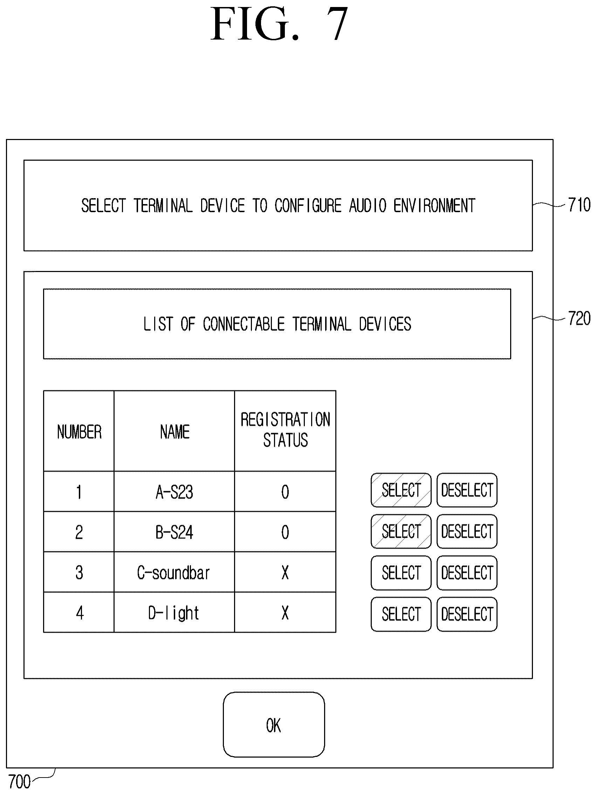

In one or more examples, the at least one processor 111 may determine a target device based on a user input. The at least one processor 111 may determine (or select) at least one of the connectable terminal devices as the target device based on the user input, which will be described with reference to FIGS. 6 and 7.

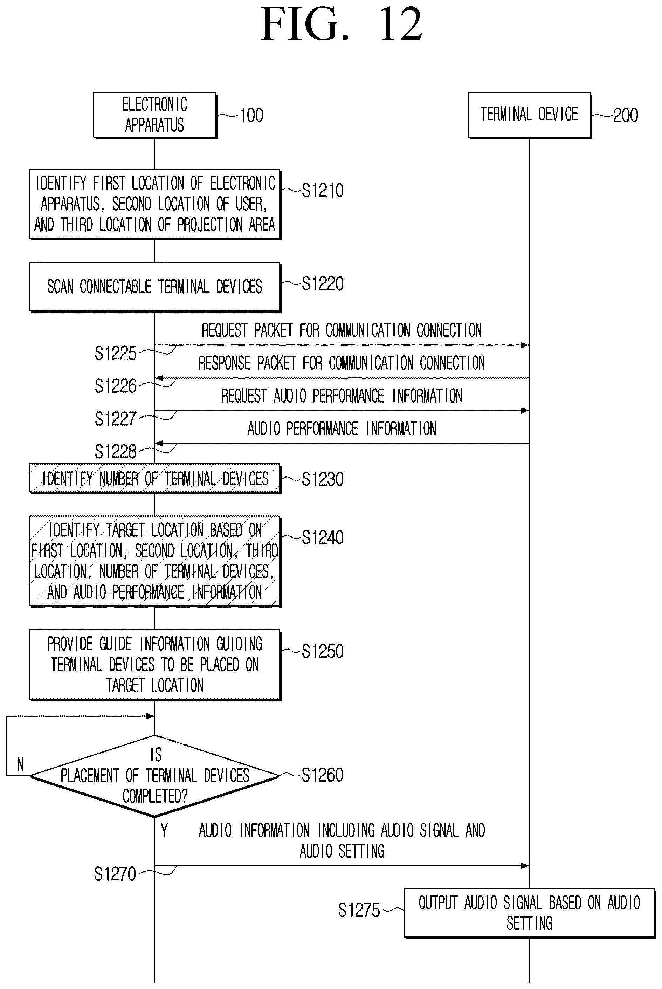

In one or more examples, the at least one processor 111 may determine a target device based on audio performance information. The at least one processor 111 may determine (or select) at least one of the connectable terminal devices as the target device based on the audio performance information. The at least one processor 111 may obtain information regarding the presence of a speaker included in the audio performance information, and determine whether a terminal device includes a speaker. The at least one processor 111 may determine (or select) only a terminal device that include a speaker as the target device, which will be described with reference to FIG. 12.

In one or more examples, thee audio performance information may be described as audio characteristic data. In one or more examples, the target device may be determined based on the target device having audio characteristic data that indicates a highest volume or least amount of noise among a plurality of candidate devices.

The at least one processor 111 may identify the number of terminal device 200 by identifying (or calculating) the number of target devices.

The at least one processor 111 may determine (or identify) a target location for placing the terminal device 200 based on the first location P1, the second location P2, and the number of terminal device 200. The target location may represent a location where the terminal device 200 may be configured in an audio environment to output an audio signal.

The at least one processor 111 may determine the target location using the first location P1 and the second location P2. The criteria for determining the target location may change depending on the number of terminal device 200. Specific examples in this regard will be described with reference to FIGS. 18 to 26.

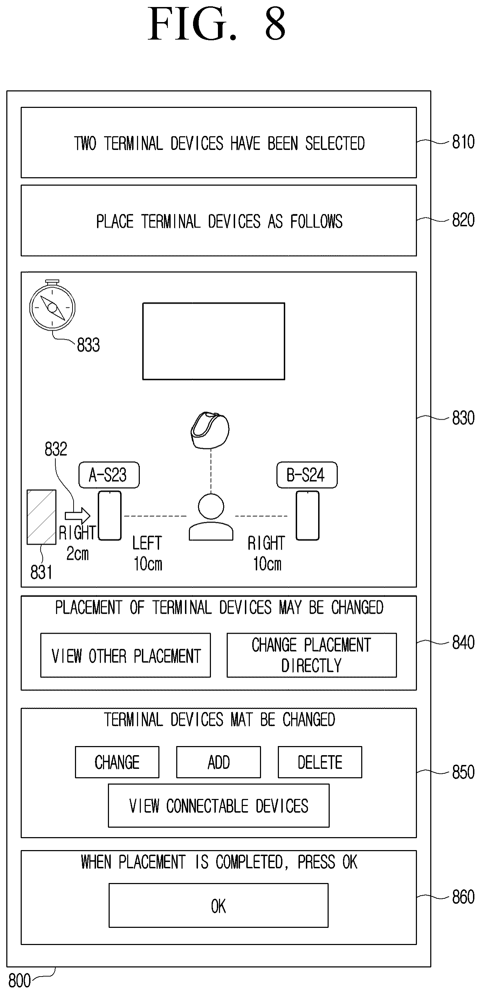

The at least one processor 111 may generate guide information to guide the terminal device 200 to be placed on the target location. The guide information may be an instruction in the form of digital data. The guide information may include at least one of a guide image or guide audio. The guide image may be an image for guiding the target location. The guide image may include at least one of a space image, the first location P1, the second location P2, or the target location. The guide image may include text for guiding. The guide image may be described as a guide screen. A description of the guide image is provided with reference to FIGS. 8 to 10.

In one or more examples, the at least one processor 111 may control the projector 112 to output guide information.

In one or more examples, the at least one processor 111 may transmit the guide information to the terminal device 200 such that the guide information is output by the terminal device 200. The terminal device 200 may output the received guide information via a display of the terminal device 200.

When the terminal device 200 is placed on the target location, the at least one processor 111 may control the communication interface 114 to transmit audio information including an audio signal to be output from the terminal device 200 to the terminal device 200, and may control the projector 112 to output a projection image corresponding to the audio signal.

The audio signal to be output from the terminal device 200 may be included in the content. The content may include an image signal and an audio signal. The image signal may be output via the projector 112 of the electronic apparatus 100, and the audio signal may be output via the speaker of the terminal device 200.

The audio information transmitted to the terminal device 200 may include at least one of an audio signal or audio setting. The audio signal may include an audio waveform over time. The audio setting may include setting items used to output an audio signal. The audio setting may include at least one of an output size setting for the audio signal or an output size setting for each frequency band.

In one or more examples, the audio setting may include setting an output size setting of the audio signal. The output size setting may be described as an audio volume setting.

In one or more examples, the audio setting may include an output size setting for each frequency band. Different frequency bands may have different output sizes. Each frequency band may be separated by a preset unit (e.g., 10 MHz, 1 GHz, etc.). The preset unit may be changed by the user. The output size setting for each of a plurality of frequency bands may be at least partially different. The output size setting for each frequency band may be described as an equalizer (EQ) setting. In one or more examples, each of the identified terminal devices may be allocated to a different frequency band such that the frequency bands do not overlap, thereby enabling the terminals to communicate wirelessly with the electronic apparatus without interference.

The at least one processor 111 may transmit audio information including at least one of an audio signal or audio setting, to the terminal device 200.

The at least one processor 111 may output an image signal included in content via the projector 112. The image signal included in the content may include an projection image corresponding to the audio signal.

When the terminal device 200 is placed on the target location, the at least one processor 111 may control the communication interface 114 to transmit audio information including an audio signal and audio setting for outputting the audio signal at a preset audio volume, to the terminal device 200.

In one or more examples, the at least one processor 111 may identify (or determine) an audio volume (output size) for outputting the audio signal based on preset criteria. The at least one processor 111 may obtain (or generate) audio setting for outputting the audio signal at an audio volume based identified on the preset criteria. The at least one processor 111 may obtain audio setting including a control instruction (or control signal) for outputting the audio signal at a preset audio volume. The at least one processor 111 may transmit audio information including the audio signal and the audio setting to the terminal device 200.

In one or more examples, the at least one processor 111 may record an audio signal output from the terminal device 200, and may analyze the recorded audio signal to perform a feedback function. The feedback function may include the operation of changing at least one of the previously identified target location or the audio setting.

The electronic apparatus 100 may further include a microphone 118. A preset audio volume may be a first audio volume, audio setting may be a first audio setting, and audio information may be first audio information. The at least one processor 111 may obtain audio data recording an audio signal output from the terminal device 200 via the microphone 118, change the first audio volume to a second audio volume based on the audio data, and control the communication interface to transmit second audio information including the second audio setting for outputting the audio signal at the second audio volume to the terminal device 200.

In one or more examples, the at least one processor 111 may perform a recording function via the microphone 118. The at least one processor 111 may obtain audio data including a recorded audio signal by recording ambient audio via the microphone 118.

The at least one processor 111 may analyze the audio data to determine whether to change the first audio setting.

In one or more examples, the at least one processor 111 may determine whether to compare the first audio setting by comparing an estimated level and a measured level in outputting the audio signal. The estimated level may represent an output size of the audio signal recorded by the electronic apparatus 100 when the audio signal is output from the terminal device 200 at a preset level. For example, the output size may be correlated with a volume level (e.g., dB). The estimated level may not be an actual measured value, but rather a level obtained based on a preset function, a preset calculation module, or any other suitable information known to one of ordinary skill in the art. The measured level may represent an output size of an audio signal from recorded audio data. The measured level may be a level obtained based on data measured directly from a recording device.

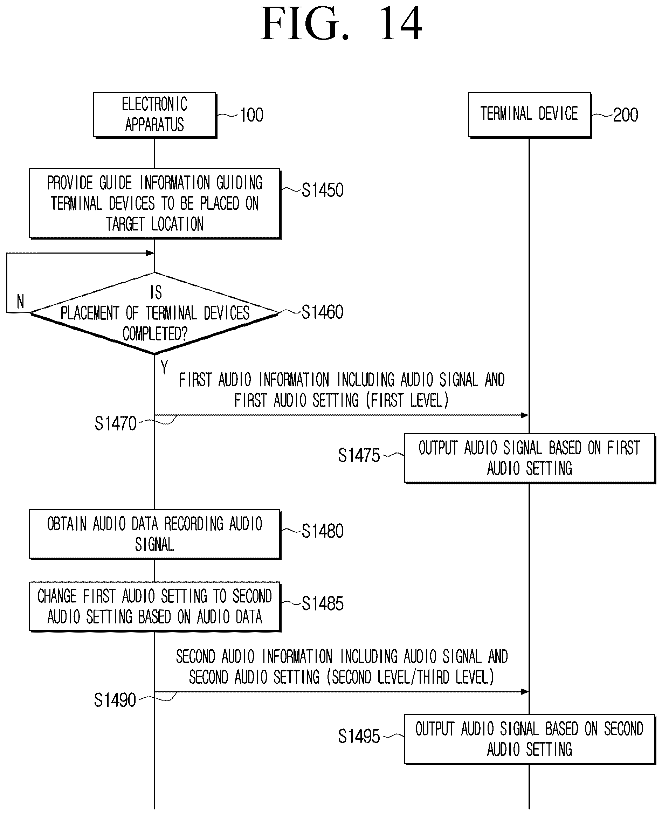

The at least one processor 111 may maintain a first audio volume (first level in FIG. 14) based on the analysis result of the audio data.

In one or more examples, the at least one processor 111 may change the first audio volume (first level in FIG. 14) to a second audio volume (second level or third level in FIG. 14) based on the analysis result of the audio data.

When the first audio volume is changed to the second audio volume, the at least one processor 111 may transmit second audio information for outputting the audio signal at the changed second audio volume, to the terminal device 200.

A specific description in this regard is provided with reference to FIG. 14.

In one or more examples, the target location may be the first target location, and the guide information may be the first guide information. The at least one processor 111 may obtain audio data that records an audio signal output from the terminal device 200 via the microphone 118, change the first target location to a second target location based on the audio data, and provide second guide information to guide the terminal device 200 to be placed on the second target location.

The at least one processor 111 may determine whether to change the initially identified target location based on the analysis result of the audio data.

The at least one processor 111 may maintain the first target location based on the analysis result of the audio data.

The at least one processor 111 may change the first target location to the second target location based on the analysis result of the audio data.

When the first target location is changed to the second target location, the at least one processor 111 may obtain (or generate) the second guide information to guide the terminal device 200 to be placed on the changed second target location. The at least one processor 111 may provide the obtained second guide information.

In one or more examples, the at least one processor 111 may control the projector 112 to output the second guide information.

In one or more examples, the at least one processor 111 may transmit the second guide information to the terminal device 200 such that the second guide information is output from the terminal device 200.

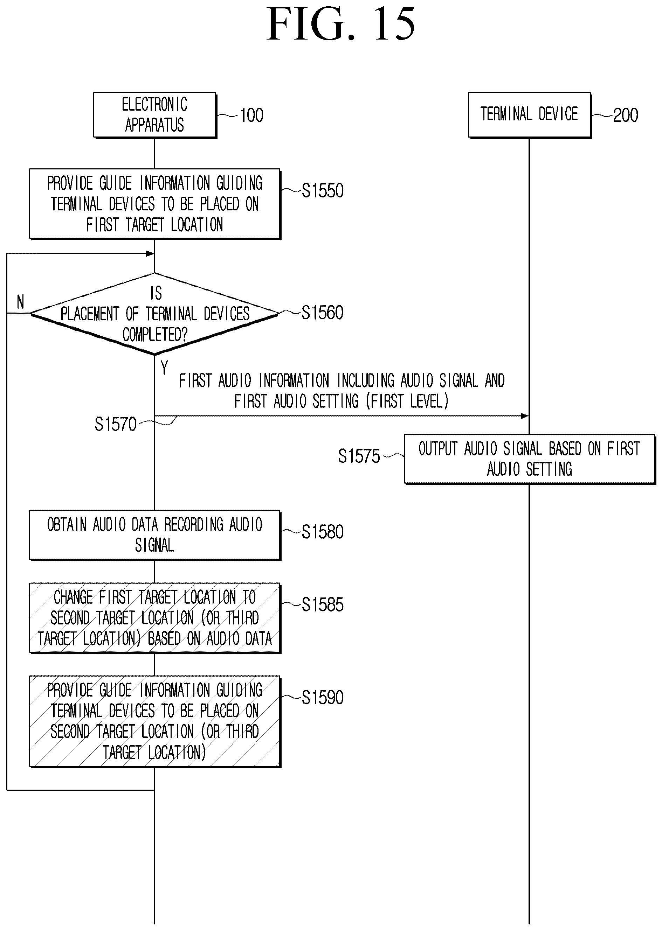

A specific description in this regard is provided with reference to FIG. 15.

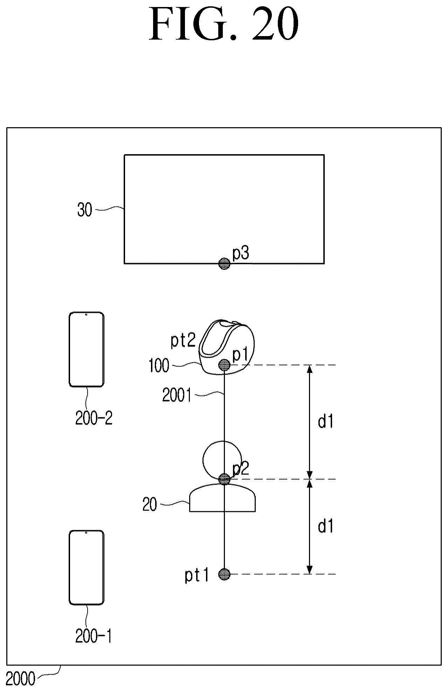

The second target location is described as a change in the first target location. In FIGS. 20 to 26, the first target location and the second target location are described as a placement location for each of a plurality of terminal devices. The ordinal number that modifies the target location may be changed.

In one or more examples, when the number of the terminal device 200 is one, the at least one processor 111 may identify an imaginary first straight line connecting the second location P2 and the first location P1, and may identify a location distant from the second location P2 by the first distance between the first location P1 and the second location P2 within the first straight line as the target location. A specific description in this regard is provided with reference to FIG. 18.

In one or more examples, the at least one processor 111 may identify a third location P3 of the projection area for outputting a projection image, and when there are a plurality of candidate locations distant from the second location P2 by the first distance within the first straight line, the at least one processor 111 may identify a candidate location further from the third location P3 among the plurality of candidate locations as the target location. A specific embodiment in this regard is provided with reference to FIG. 19.

In one or more examples, the at least one processor 111 may identify the third location P3 with reference to the first location P1. The at least one processor 111 may identify the projection area 30 with reference to the first location P1, and identify the location of the identified projection area 30 as the third location P3.

The candidate location may be described as a candidate target location, a preliminary location, a candidate preliminary target location, etc.

In one or more examples, when the number of the terminal device 200 is two, the at least one processor 111 may determine all of the plurality of candidate locations distant from the second location P2 by the first distance within the first straight line as the target locations. The at least one processor 111 may determine a first candidate location as a first target location where the first terminal device 200-1 is placed, a the second candidate location as a second target location where the terminal device 200 is placed, which will be described with reference to FIG. 20.

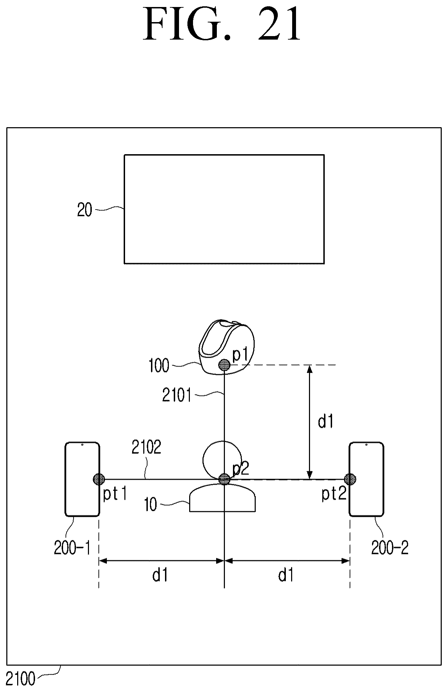

In one or more examples, when the number of the terminal device 200 is two, the at least one processor 111 may identify an imaginary first straight line connecting the second location P2 and the first location P1, identify an imaginary second straight line perpendicular to the first straight line, and identify a plurality of locations distant from the second location P2 by the first distance between the first location P1 and the second location P2 within the second straight line as the target locations. A specific description in this regard is provided with reference to FIG. 21.

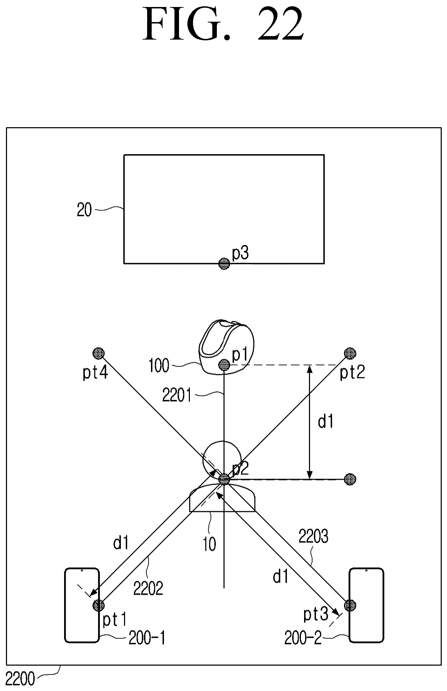

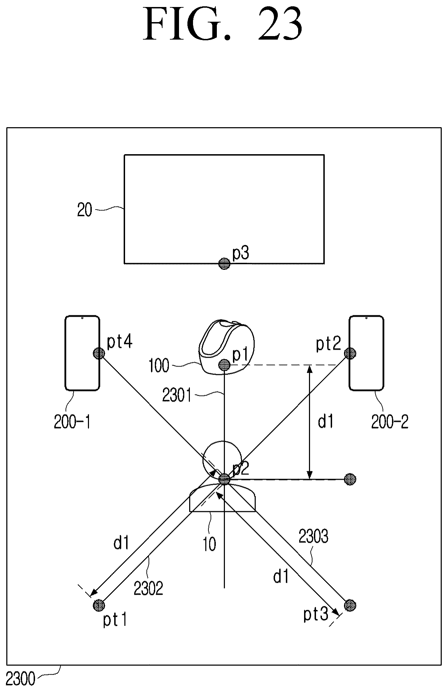

In one or more examples, when the number of the terminal device 200 is two, the at least one processor 111 may identify an imaginary first straight line connecting the second location P2 and the first location P1, identify an imaginary second straight line and an imaginary third straight line inclined at a preset angle (120 degrees or 60 degrees) from the imaginary first straight line. The at least one processor 111 may determine one of a plurality of candidate locations located on the imaginary second straight line as a first target location, and one of a plurality of candidate locations located on the imaginary third straight line as a second target location, which will be described with reference to FIGS. 22 and 23.

In one or more examples, when the number of the terminal device 200 is three, the at least one processor 111 may identify an imaginary first straight line connecting the second location P2 and the first location P1, and determine one of a plurality of candidate locations distant from the second location P2 by the first distance with reference to the second location P2 on the first straight line as the first target location.

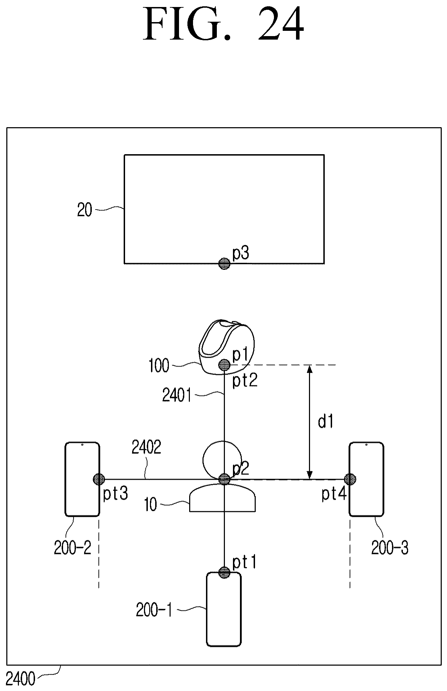

The at least one processor 111 may identify a second straight line perpendicular to the first straight line with reference to the second location P2, and determine a plurality of candidate locations by the first distance D1 with reference to the second location P2 on the second straight line as the second target location and the third target location, which will be described with reference to FIG. 24.

In one or more examples, when the number of the terminal device 200 is three, the at least one processor 111 may identify an imaginary first straight line connecting the second location P2 and the first location P1, and determine one of a plurality of candidate locations distant by the first distance with reference to the second location P2 on the first straight line as the first target location.

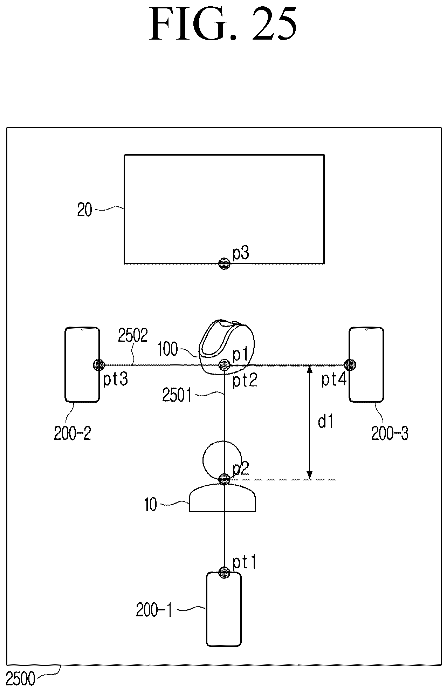

The at least one processor 111 may identify a second straight line perpendicular to the first straight line with reference to the first location P1, and determine a plurality of candidate locations distant by the first distance D1 with reference to the first location P1 on the second straight line as the second target location and the third target location, which will be described with reference to FIG. 25.

According to one or more embodiments, the imaginary straight line may be a straight line passing through two reference points.

According to one or more embodiments, the imaginary straight line may be a straight line that passes only between two reference points.

When a preset event is identified, the at least one processor 111 may determine a location distant from the user's location by a threshold distance as the target location.

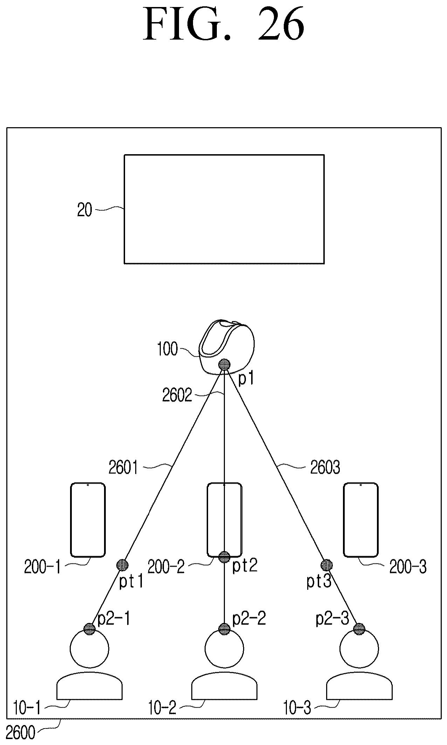

The preset event may include at least one of an event in which a plurality of users are identified, or an event in which a user input is received to operate in a preset mode. The preset mode may be one of a quiet mode or a night mode, which will be described in greater detail with reference to FIG. 26.

The at least one processor 111 may generate an audio signal corresponding to the target location and control the communication interface 114 to transmit audio information including the audio signal to the terminal device 200, and the audio signal may be a multichannel audio signal.

The at least one processor 111 may generate the audio signal by taking into account the target location. This is to provide an audio signal output from the target location with reference to the user's second location P2 to the user appropriately. For example, the audio signal may be configured to be output at an appropriate size for the user or in a preset environment. The appropriate size may be a predetermined size that may be set based on a type of terminal device (e.g., model). The preset environment may be an environment that provides a multichannel audio signal.

The audio signal included in the content may be a multichannel audio signal.

In one or more examples, when the audio signal is a two-channel signal, the at least one processor 111 may obtain a first audio signal corresponding to a first channel (left channel) and a second audio signal corresponding to a second channel (right channel).

The at least one processor 111 may transmit the multichannel audio signal to one terminal device 200.

In one or more examples, the at least one processor 111 may transmit the multichannel audio signal to the first terminal device 200-1 and the second terminal device 200-2. The at least one processor 111 may transmit a first audio signal to the first terminal device 200-1 and a second audio signal to the second terminal device 200-2.

The first terminal device 200-1 may output the first audio signal corresponding to the first channel (the left channel), and the second terminal device 200-2 may output the second audio signal corresponding to the second channel (the right channel). The user may be provided with an audio environment for the two channels.

In one or more examples, when the audio signal is a three-channel signal, the at least one processor 111 may obtain a first audio signal corresponding to a first channel (left channel), a second audio signal corresponding to a second channel (right channel), and a third audio signal corresponding to a third channel (woofer channel).

The at least one processor 111 may transmit a first audio signal to the first terminal device 200-1, a second audio signal to the second terminal device 200-2, and a third audio signal to the third terminal device 200-3.

The at least one processor 111 may identify the number of terminal devices to configure an audio environment based on the channel information of the multichannel audio signal.

When the audio signal included in the content has one channel, the at least one processor 111 may identify the number of terminal devices as one. The at least one processor 111 may identify (or determine) one of a plurality of terminal devices as the target device.

In one or more examples, the at least one processor 111 may determine the target device based on a user input.

In one or more examples, the at least one processor 111 may determine the device with the best performance based on audio performance information as the target device. Excellent performance may indicate that the corresponding device is capable of performing a woofer function or that the output information (or output value) is the highest.

When the audio signal included in the content has two channels, the at least one processor 111 may identify the number of terminal devices as two. The at least one processor 111 may identify (or determine) two of the plurality of terminal devices as the target devices.

When the audio signal included in the content has three channels, the at least one processor 111 may identify the number of terminal devices as three. The at least one processor 111 may identify (or determine) three of the plurality of terminal devices as the target devices.

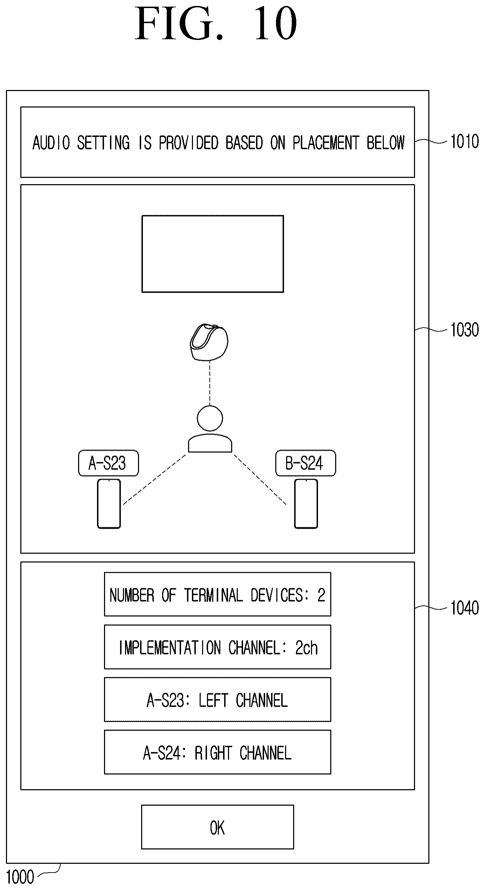

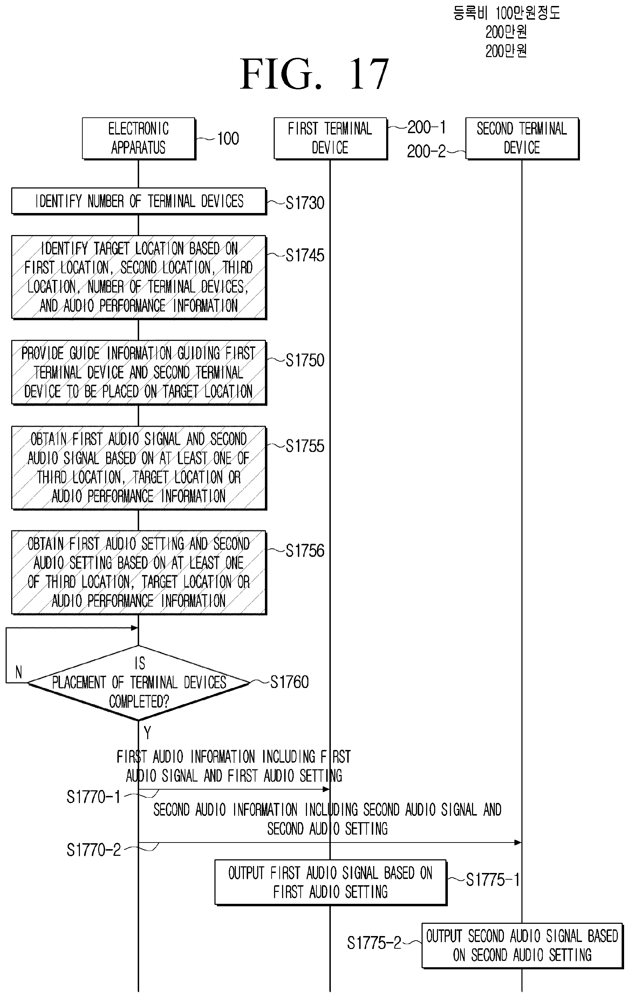

An additional description regarding channels is provided with reference to FIGS. 10 and 17.

The at least one processor 111 may generate audio setting corresponding to the target location and control the communication interface 114 to transmit audio information including the audio setting to the terminal device 200, and the audio setting may be equalizer (EQ) setting .

In one or more examples, the EQ setting may represent an output size setting for each frequency band. The at least one processor 111 may generate an EQ setting indicating whether to output an audio signal at a certain output size for each frequency band from a speaker included in the terminal device 200. The EQ setting may be different for each terminal device connected to the electronic apparatus 100.

Once the EQ setting is generated, the at least one processor 111 may provide (or transmit) the same EQ setting for the same terminal device. The at least one processor 111 may store a history of the EQ setting in the memory 113 using identification information of the connected terminal device or user account information corresponding to the terminal device.

The at least one processor 111 may obtain (or extract) an EQ setting corresponding to the target device based on the history of EQ settings stored in the memory 113. The at least one processor 111 may transmit the EQ setting corresponding to the target device to the target device.

In this disclosure, the electronic apparatus 100 is described as outputting an audio signal using the terminal device 200. Depending on one or more embodiments, a speaker 117 included in the electronic apparatus 100 may be used in an auxiliary manner to configure an audio environment. The location of the electronic apparatus 100 may be changed, and guide information to guide the location of the electronic apparatus 100 may be generated.

Various information identified (obtained or determined) in this disclosure may be set directly by a user input. For example, the audio setting applied to each terminal device 200 may be determined by a user input.

Although the electronic apparatus 100 is described as including the projector 112, the electronic apparatus 100 may not include the projector 112. The electronic apparatus 100 may provide content including only an audio signal without outputting a projection image.

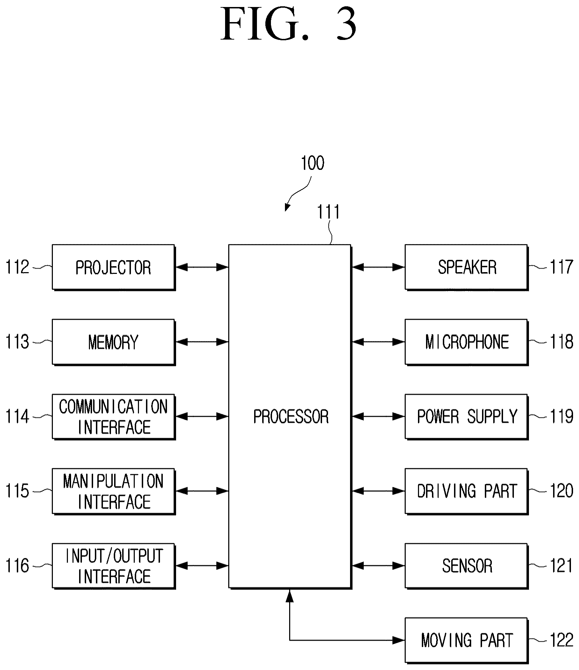

FIG. 3 is a block diagram provided to explain specific configuration of the electronic apparatus 100 of FIG. 2 according to one or more embodiments.

Referring to FIG. 3, the electronic apparatus 100 may include at least one of the at least one processor 111, the projector 112, the memory 113, the communication interface 114, a manipulation interface 115, an input/output interface 116, a speaker 117, a microphone 118, a power supply 119, a driver 120, a sensor 121, or a moving part 122.

The configurations shown in FIG. 3 are only example embodiments, and some configurations may be omitted, and new configurations may be added. Those already described in FIG. 2 are omitted.

The at least one processor 111 may be implemented as a digital signal processor (DSP) for processing digital signals, a microprocessor, or a time controller (TCON). However, the at least one processor 111 is not limited thereto, and the at least one processor 120 may include one or more of a central processing unit (CPU), a micro controller unit (MCU), a micro processing unit (MPU), a controller, an application processor (AP), a graphics-processing unit (GPU), a communication processor (CP), and an ARM (advanced reduced instruction set computer (RISC) machines) processor, or may be defined as the corresponding term. The at least one processor 111 may be implemented as a system on chip (SoC) with embedded processing algorithms, a large scale integration (LSI), or in the form of a field programmable gate array (FPGA). The at least one processor 111 may perform various functions by executing computer executable instructions stored in the memory 113.

The projector 112 may be configured to project an image to the outside. According to various embodiments, the projector 112 may be implemented in various projection methods (e.g., cathode-ray tube (CRT) method, liquid crystal display (LCD) method, digital light processing (DLP) method, laser method, etc.). For example, the CRT method has basically the same principle as a CRT monitor. The CRT method magnifies an image with a lens in front of the cathode ray tube (CRT) and displays the image on the screen. Depending on the number of cathode ray tubes, it is divided into 1-tube type and 3-tube type. In the case of 3-tube type, red, green, and blue cathode ray tubes may be implemented separately.

In another example, the LCD method transmits light from a light source onto a liquid crystal to display an image. The LCD method may be divided into single-plate type and three-plate type, and in the case of the three-plate type, light from a light source may be separated into red, green, and blue in a dichroic mirror (a mirror that reflects only certain colors of light while letting the rest pass through), and then the light may be gathered back together after passing through the liquid crystal.

Another example is the DLP method, which uses a digital micromirror device (DMD) chip to display an image. The projector of the DLP method may include a light source, a color wheel, a DMD chip, a projection lens, etc.. The light output from the light source may be colored as it passes through a rotating color wheel. After passing through the color wheel, the light is input to the DMD chip. The DMD chip includes numerous microscopic mirrors, which reflect the light input to the DMD chip. The projection lens may serve to magnify the light reflected from the DMD chip to the size of the image.

In another example, the laser method includes a diode pumped solid state (DPSS) laser and a galvanometer. A laser that outputs various colors installs three DPSS lasers for each RGB color and then, uses a laser whose optical axes are overlapped using a special mirror. The galvanometer includes a mirror and a high-power motor and moves the mirror at a high speed. For example, the galvanometer may rotate the mirror at up to 40 KHz/sec. The galvanometer is mounted according to the scan direction, and since a projector generally performs flat scanning, the galvanometer may also be placed divided into x and y axes.

In one or more examples, the projector 112 may include various types of light sources. For example, the projector 112 may include a light source of at least one of a lamp, an LED, or a laser.

The projector 112 may output an image in a 4:3 aspect ratio, a 5:4 aspect ratio, a 16:9 wide aspect ratio, and may output images in various resolutions such as WVGA (854*480), SVGA (800*600), XGA (1024*768), WXGA (1280*720), WXGA (1280*800), SXGA (1280*1024), UXGA (1600*1200), Full HD (1920*1080), etc. depending on the aspect ratio.

In one or more examples, the projector 112 may perform various functions to adjust the output image under the control of the at least one processor 111. For example, the projector 112 may perform functions such as zoom, keystone, quick-corner (4-corner) keystone, lens shift, or any other suitable projector function known to one of ordinary skill in the art.

In one or more examples, the, the projector 112 may extend or reduce an image based on the distance from the screen (projection distance). In other words, the projector 112 may perform a zoom function based on the distance from the screen. In this case, the zoom function may include a hardware method of adjusting the size of the screen by moving the lens, and a software method of adjusting the size of the screen by cropping the image, etc. Meanwhile, when the zoom function is performed, the focus of the image needs to be adjusted. For example, the method of adjusting the focus may include a manual focus method, a motorized focus method, or any other adjusting method known to one of ordinary skill in the art. The manual focus method refers to a method of focusing manually, and the motorized method refers to a method in which the projector automatically focuses using a built-in motor when the zoom function is performed. When performing the zoom function, the projector 112 may provide a digital zoom function through software, and may provide an optical zoom function by moving the lens through the driver 120 to perform the zoom function.

In one or more examples, the projector 112 may perform a keystone correction function. For example, the height is not appropriate for front projection, the screen may be distorted upward or downward. The keystone correction function refers to a function that corrects the distorted screen. For example, if the screen is distorted in the left and right direction, it can be corrected by using horizontal keystone, and if the screen is distorted in the up and down direction, it can be corrected by using vertical keystone. A quick-corner (4-corner) keystone correction function corrects the screen when the center area of the screen is normal but the corner areas are out of balance. A lens-shift function shifts the screen as it is when an image is off screen.

In one or more examples, the projector 112 may automatically provide a zoom/keystone/focus function by analyzing the surrounding environment and the projection environment without a user input. Specifically, the projector 112 may automatically provide the zoom/keystone/focus function based on the distance of the electronic apparatus 100 from the screen detected through a sensor (depth camera, distance sensor, infrared sensor, illumination sensor, etc.), information regarding the space in which the electronic apparatus 100 is currently located, information regarding the amount of ambient light, etc.

The projector 112 may provide a lighting function using a light source. For example the projector 112 may provide a lighting function by outputting a light source using an LED. According to various embodiments, the projector 112 may include a single LED, and according to other embodiments, the electronic apparatus 100 may include a plurality of LEDs. The projector 112 may output a light source using a surface-emitting LED according to one or more embodiments. In one or more examples, the surface-emitting LED may refer to an LED having a structure in which an optical sheet is disposed on an upper side of the LED so that the light source is evenly distributed and output. Specifically, when a light source is output through the LED, the light source may be evenly distributed through the optical sheet, and the light source distributed through the optical sheet may be incident on the display panel.

In one or more examples, the projector 112 may provide a dimming function for adjusting the intensity of the light source to the user. Specifically, when a user input to adjust the intensity of the light source is received from the user via the manipulation interface 115 (e.g., touch display button or dial), the projector 112 may control the LED to output the intensity of the light source corresponding to the received user input.

The projector 112 may provide a dimming function based on content analyzed by the at least one processor 111 without a user input. Specifically, the projector 112 may control an LED to output the intensity of the light source based on information regarding the content currently being provided (e.g., content type, content brightness, etc.).

In one or more examples, the projector 112 may control color temperature under the control of the at least one processor 111. In one or more examples, the at least one processor 111 may control the color temperature based on content. Specifically, when content is identified to be output, the at least one processor 111 may obtain frame-by-frame color information of the content determined to be output. Subsequently, the at least one processor 111 may control the color temperature based on the obtained frame-by-frame color information. The at least one processor 111 may obtain at least one or more dominant colors of the frame based on the frame-by-frame color information. In addition, the at least one processor 111 may adjust the color temperature based on the obtained at least one or more dominant colors. For example, the color temperature that can be adjusted by the at least one processor 111 may be classified as a warm type or a cold type. In one or more examples, it is assumed that the frame to be output (hereinafter, referred to as the output frame) includes a scene where the fire occurred. The at least one processor 111 may identify (or obtain) that the dominant color is red based on the color information included in the current output frame. The at least one processor 111 may then identify a color temperature corresponding to the identified dominant color (red). The color temperature corresponding to red may be a warm type. The at least one processor 111 may use an artificial intelligence model to obtain the color information or dominant color of the frame. According to various embodiments, the artificial intelligence model may be stored in the electronic apparatus 100 (e.g., memory 113). According to other embodiments, the artificial intelligence model may be stored in an external server capable of performing communication with the electronic apparatus 100.

The memory 113 may be implemented as an internal memory such as ROM (e.g., electrically erasable programmable read-only memory (EEPROM)) and RAM included in the at least one processor 111, or may be implemented as a separate memory. In this case, the memory 113 may be implemented as a memory embedded in the electronic apparatus 100 or as a memory detachable from the electronic apparatus 100 depending on the data storage purpose. For example, in the case of data for driving the electronic apparatus 100, the data may be stored in the memory embedded in the electronic apparatus 100, and in the case of data for the expansion function of the electronic apparatus 100, the data may be stored in a memory detachable from the electronic apparatus 100.

The memory embedded in the electronic apparatus 100 may be implemented as at least one of a volatile memory (e.g. a dynamic RAM (DRAM), a static RAM (SRAM), or a synchronous dynamic RAM (SDRAM)) or a non-volatile memory (e.g., a one-time programmable ROM (OTPROM), a programmable ROM (PROM), an erasable and programmable ROM (EPROM), an electrically erasable and programmable ROM (EEPROM), a mask ROM, a flash ROM, a flash memory (e.g. a NAND flash or a NOR flash), a hard drive, or a solid state drive (SSD)), and the memory detachable from the electronic apparatus 100 may be implemented in the form of a memory card (e.g., a compact flash (CF), a secure digital (SD), a micro secure digital (Micro-SD), a mini secure digital (Mini-SD), an extreme digital (xD), or a multi-media card (MMC)), an external memory connectable to a USB port (e.g., a USB memory), or any other suitable memory structure known to one of ordinary skill in the art.

The memory 113 may store at least one instruction for the electronic apparatus 100. In addition, the memory 113 may store an operating system (O/S) for operating the electronic apparatus 100. The memory 113 may also store various software programs or applications for operating the electronic apparatus 100 according to various embodiments of the present disclosure. The memory 113 may include a semiconductor memory such as a flash memory, or magnetic storage media such as a hard disk, or any other suitable memory structure known to one of ordinary skill in the art.

For example, the memory 113 may store various software modules for operating the electronic apparatus 100 according to various embodiments of the present disclosure, and the at least one processor 111 may control the operation of the electronic apparatus 100 by executing various software modules stored in the memory 113. In other words, the memory 113 may be accessed by the at least one processor 131, and the data may be read/written/modified/deleted/updated, etc. by the at least one processor 111.

In the present disclosure, the term 'memory 113' may be used to include a storage, ROM or RAM in the at least one processor 111, or a memory card (e.g., micro SD card, memory stick) mounted in the electronic apparatus 100.

The communication interface 114 may be configured to perform communication with various types of external devices according to various types of communication methods. The communication interface 114 may include wireless or wired communication modules. Each communication module may be implemented as at least one hardware chip.

The wireless communication module may be a module that performs communication with an external device wirelessly. For example, the wireless communication module may include at least one of a Wi-Fi module, a Bluetooth module, an infrared communication module or other communication modules.

The Wi-Fi module and the Bluetooth module may perform communication using a Wi-Fi method and a Bluetooth method, respectively. When using a Wi-Fi module or a Bluetooth module, various connection information such as SSID and session keys are first transmitted and received, and various information can be transmitted and received after establishing a communication connection using the same.

The infrared communication module performs communication according to an infrared Data Association (IrDA) communication technology which transmits data wirelessly over a short distance using infrared rays between optical light and millimeter waves.

In addition to the above-described communication methods, at least one communication chip that performs communication according to various wireless communication standards, such as Zigbee, 3rd Generation (3G), 3rd Generation Partnership Project (3GPP), Long Term Evolution (LTE), LTE Advanced (LTE-A), 4th Generation (4G), 5th Generation (5G), etc. may be included.

The wired communication module may be a module that performs communication with an external device via cable. For example, the wired communication module may include at least one of a local area network (LAN) module, an Ethernet module, pair cables, coaxial cables, fiber optic cables, or a Ultra Wide-Band (UWB) module.

The manipulation interface 115 may include various types of input devices. For example, the manipulation interface 115 may include physical buttons. In this case, the physical buttons may include a function key, a direction key (e.g., a 4-direction key), or a dial button. According to various embodiments, the physical buttons may be implemented as a plurality of keys. According to another embodiment, the physical buttons may be implemented as one key. When the physical buttons are implemented as one key, the electronic apparatus 100 may receive a user input in which one key is pressed for more than a threshold time. When the user input in which one key is pressed for more than a threshold time is received, the at least one processor 111 may perform a function corresponding to the user input. For example, the at least one processor 111 may provide a lighting function based on the user input.

The manipulation interface 115 may receive a user input using a non-contact method. When receiving a user input using a contact method, physical force must be transmitted to the electronic apparatus 100. Accordingly, a method for controlling the electronic apparatus 100 regardless of physical force may be needed. Specifically, the manipulation interface 115 may receive a user gesture and perform an operation corresponding to the received user gesture. The manipulation interface 115 may receive a user gesture through a sensor (e.g., an image sensor or an infrared sensor).

The manipulation interface 115 may receive a user input using a touch method. For example, the manipulation interface 115 may be implemented as a touch screen or touch sensor where the manipulation interface 115 may receive a user input through the touch screen or touch sensor. According to various embodiments, the touch method may be implemented as a non-contact method. For example, the touch sensor may determine whether the user's body approaches within a threshold distance. The touch sensor may identify a user input even when the user is not touching the touch sensor. According to another implementation, the touch sensor may identify a user input when the user touches the touch sensor.

In one or more examples, the electronic apparatus 100 may receive a user input in various ways other than using the manipulation interface 115 described above. In various embodiments, the electronic apparatus 100 may receive a user input through an external remote control device. The external remote control device may be a remote control device corresponding to the electronic apparatus 100 (e.g., a dedicated control device for the electronic apparatus 100) or a user's portable communication device (e.g., a smartphone or a wearable device). The user's portable communication device may store an application for controlling the electronic apparatus 100. The portable communication device may obtain a user input through a stored application and transmit the obtained user input to the electronic apparatus 100. The electronic apparatus 100 may receive a user input from the portable communication device and perform an operation corresponding to the user's control command.

In one or more examples, the electronic apparatus 100 may receive a user input using voice recognition. According to various embodiments, the electronic apparatus 100 may receive a user voice through a microphone included in the electronic apparatus 100. According to another embodiment, the electronic apparatus 100 may receive a user voice from a microphone or an external device. Specifically, the external device may acquire a user voice through an microphone of the external device and transmit the acquired user voice to the electronic apparatus 100. The user voice transmitted from the external device may be audio data or digital data converted from the audio data (e.g., audio data converted to a frequency domain, etc.). The electronic apparatus 100 may perform an operation corresponding to the received user voice. Specifically, the electronic apparatus 100 may receive audio data corresponding to the user voice through a microphone. In addition, the electronic apparatus 100 may convert the received audio data into digital data. Further, the electronic apparatus 100 may convert the converted digital data into text data using a STT (Speech To Text) function. According to various embodiments, the Speech To Text (STT) function may be performed directly on the electronic apparatus 100.

According to another embodiment, the STT (Speech To Text) function may be performed on an external server. The electronic apparatus 100 may transmit digital data to an external server. The external server may convert the digital data into text data and obtain control command data based on the converted text data. The external server may transmit the control command data (In one or more examples, the text data may also be included) to the electronic apparatus 100. The electronic apparatus 100 may perform an operation corresponding to a user voice based on the obtained control command data.

The electronic apparatus 100 may provide a voice recognition function using one assistant (or an artificial intelligence assistant such as BixbyTM, etc.), but this is only one of various embodiments, and the electronic apparatus 100 a voice recognition function through a plurality of assistants. In one or more examples, the electronic apparatus 100 may provide a voice recognition function by selecting one of a plurality of assistants based on a trigger word corresponding to the assistance or a specific key present on a remote control device.

The electronic apparatus 100 may receive a user input using screen interaction. Screen interaction may refer to a function of identifying whether a preset event occurs through an image projected on a screen (or projection surface) by the electronic apparatus 100, and obtaining a user input based on the preset event. The preset event may refer to an event in which a preset object is identified at a specific location (e.g., a location where a UI for receiving a user input is projected). The preset object may include at least one of the user's body part (e.g., a finger), a pointing stick, or a laser point. When the preset object is identified at a location corresponding to the projected UI, the electronic apparatus 100 may identify that a user input for selecting the projected UI is received. For example, the electronic apparatus 100 may project a guide image to display a UI on the screen. In addition, the electronic apparatus 100 may identify whether the user selects the projected UI. Specifically, when the preset event is identified at the location of the projected UI, the electronic apparatus 100 may identify that the user has selected the projected UI. The projected UI may include at least one or more items. The electronic apparatus 100 may perform spatial analysis to identify whether the preset event is at the location of the projected UI. The electronic apparatus 100 may perform spatial analysis through a sensor (e.g., an image sensor, an infrared sensor, a depth camera, a distance sensor, etc.). The electronic apparatus 100 may identify whether the preset event occurs at the specific location (a location where the UI is projected) by performing spatial analysis. In addition, when it is identified that the preset event occurs at the specific location (a location where the UI is projected), the electronic apparatus 100 may identify that a user input for selecting the UI corresponding to the specific location is received.

The input/output interface 116 may be configured to input and output at least one of an audio signal or an image signal. The input/output interface 116 may receive at least one of an audio signal or an image signal from an external device, and output a control command to the external device.

Depending on the implementation example, the input/output interface 116 may be implemented as an interface that inputs and outputs only audio signals and an interface that inputs and outputs only image signals, or may be implemented as an interface that inputs and outputs both audio signals and image signals.

In various embodiments of the present disclosure, the input/output interface 160 may be implemented as at least one or more of wired input/out interface among High Definition Multimedia Interface (HDMI), Mobile High-Definition Link (MHL), Universal Serial Bus (USB) C-type, Display Port (DP), Thunderbolt, Video Graphics Array (VGA) port, RGB port, D-subminiature (D-SUB), or Digital Visual Interface (DVI). According to various embodiments, the wired input/output interface may be implemented as an interface that inputs and outputs only audio signals and an interface that inputs and outputs only image signals, or may be implemented as a single interface that inputs and outputs both audio signals and image signals.

The electronic apparatus 100 may receive data through a wired input/output interface, but this is only one of various, and power may be supplied through a wired input/output interface. For example, the electronic apparatus 100 may receive power from an external battery through USB C-type or from an outlet through a power adapter. As another example, the electronic apparatus 100 may receive power from an external device (e.g., a laptop or a monitor, etc.) through DP.

It may be implemented that an audio signal is received through a wired input/output interface and an image signal is received through a wireless input/output interface (or communication interface). Alternatively, it may be implemented that an audio signal is received through a wireless input/output interface (or communication interface) and an image signal is received through a wired input/output interface.

The speaker 117 may be configured to output an audio signal. For example the speaker 117 may include an audio output mixer, an audio signal processor, and a sound output module. The audio output mixer may synthesize a plurality of audio signals to be output into at least one audio signal. For example, the audio output mixer may synthesize an analog audio signal and another analog audio signal (e.g., an analog audio signal received from an external source) into at least one analog audio signal. The sound output module may include a speaker or an output terminal. According to various embodiments, the sound output module may include a plurality of speakers, and in this case, the sound output module may be disposed inside the main body, and the sound emitted by covering at least a portion of the diaphragm of the sound output module may pass through a waveguide to be transmitted outside the main body. The sound output module may include a plurality of sound output units, and the plurality of sound output units may be arranged symmetrically on the exterior of the main body so that sound can be emitted in all directions, In one or more examples, in all directions of 360 degrees.

The microphone 118 may be configured to receive a user voice or other sound and convert it into audio data. The microphone 118 may receive a user voice in an activated state. For example, the microphone 118 may be integrally formed in the direction of the top, front, side, etc. of the electronic apparatus 100. The microphone 118 may include various components such as a microphone that collects a user voice in an analog form, an amplification circuit that amplifies the collected user voice, an A/D conversion circuit that samples the amplified user voice and converts it into a digital signal, a filter circuit that removes noise components from the converted digital signal, etc.

The power supply 119 may receive power from the outside and supply power to various components of the electronic apparatus 100. The power supply 119 according to various embodiments of the present disclosure may receive power through various methods. In various embodiments, the power supply 119 may receive power using a connector 130 as shown in FIG. 1. The power supply 119 may receive power using a 220V DC power cord. However, the present disclosure is not limited to this, and the electronic apparatus 100 may be supplied with power using a USB power cord or using a wireless charging method.

The power supply 119 may receive power using an internal battery or an external battery. The power supply 119 according to various embodiments of the present disclosure may receive power through an internal battery. As an example, the power 119 may charge the power of the internal battery using at least one of a 220V DC power cord, a USB power cord, or a USB C-Type power cord, and receive power through the charged internal battery. The power supply 119 according to various embodiments of the present disclosure may receive power through an external battery. For example, when the electronic apparatus 100 and an external battery are connected through various wired communication methods such as a USB power cord, a USB C-Type power cord, and a socket groove, the power supply 119 may receive power through the external battery. In other words, the power supply 119 may receive power directly from the external battery, or charge the internal battery through the external battery and receive power from the charged internal battery.

The power supply 119 according to the present disclosure may receive power using at least one of a plurality of power supply methods described above.

With respect to power consumption, the electronic apparatus 100 may have power consumption below a preset value (e.g., 43W) due to socket type, other standards, etc. In this case, the electronic apparatus 100 may change power consumption to reduce power consumption when using a battery. In other words, the electronic apparatus 100 may change power consumption based on a power supply method and power usage amount, etc.

The driver 120 may drive at least one hardware configuration included in the electronic apparatus 100. The driver 120 may generate physical force and transmit it to at least one hardware configuration included in the electronic apparatus 100.

The driver 120 may generate driving power to move hardware configuration included in the electronic apparatus 100 (e.g., to move the electronic apparatus 100) or for a rotation operation of configuration (e.g., rotation of a projection lens).

The driver 120 may adjust the projection angle of the projector 112. The driver 120 may move the location of the electronic apparatus 100. The driver 120 may control a moving member to move the electronic apparatus 100. For example, the driver 120 may control a moving member using a motor.

The sensor 121 may include at least one sensor. Specifically, the sensor 121 may include at least one of a tilt sensor that senses the tilt of the electronic apparatus 100 or an image sensor that captures an image. The tilt sensor may be an acceleration sensor or a gyro sensor, and the image sensor may be a camera or a depth camera. The tilt sensor may be described as a motion sensor. The sensor 121 may include various sensors in addition to the tilt sensor or the image sensor. For example, the sensor 121 may include an illumination sensor and a distance sensor. The distance sensor may be Time of Flight (ToF). The sensor 121 may include a LiDAR sensor.

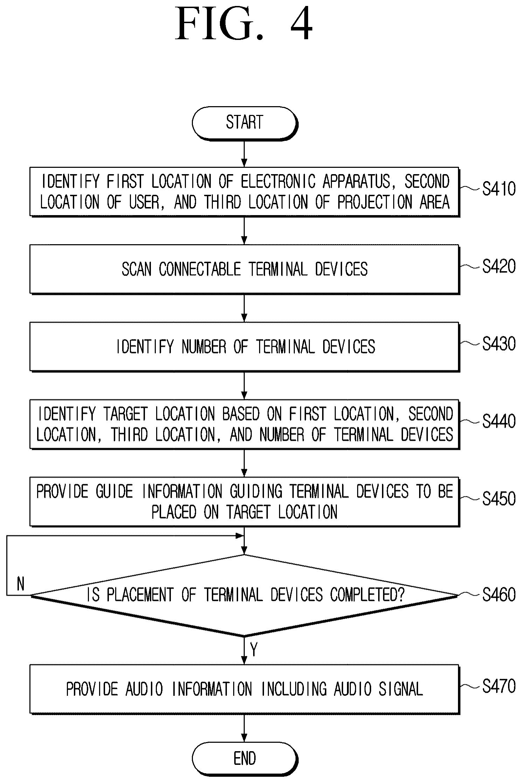

FIG. 4 is a view provided to explain an operation of guiding a target location of the terminal device 200 according to one or more embodiments.

Referring to FIG. 4, the electronic apparatus 100 may identify at least one of a first location of the electronic apparatus 100, a second location of the user 20, and a third location of the projection area 30 (S410).

The electronic apparatus 100 may scan connectable terminal devices (S420). Based on a result of scanning, the electronic apparatus 100 may identify the number of terminal devices 200 to configure an audio environment (S430). The electronic apparatus 100 may identify the number of external terminal devices to output an audio signal associated with content such as content output by the projector of the electronic apparatus.

The electronic apparatus 100 may identify a target location based on the first location, the second location, the third location, and the number of terminal device 200 (S440).

The electronic apparatus 100 may provide guide information to guide the terminal device 200 to be placed on the target location (S450). In one or more examples, the guide information may be digital information transmitted to the terminal device such as an image or an audio instruction.

In one or more examples, the electronic apparatus 100 may output the guide information directly from the electronic apparatus 100.

In one or more examples, the electronic apparatus 100 may provide the guide information through the terminal device 200. The electronic apparatus 100 may transmit the guide information to the terminal device 200. The terminal device 200 may output the guide information received from the electronic apparatus 100.

The electronic apparatus 100 may determine whether the placement of the terminal device is completed (S460).

In one or more examples, the electronic apparatus 100 may identify whether the placement of the terminal device 200 is completed based on a user input. The electronic apparatus 100 may provide guide information requesting a user input when the placement of the terminal device 200 is completed. When a user input indicating that the placement of the terminal device 200 is completed is received via the guide information, the electronic apparatus 100 may identify that the placement of the terminal device 200 is completed, which will be described with reference to UI 760 in FIG. 7.

In one or more examples, the electronic apparatus 100 may identify whether the placement of the terminal device 200 is completed based on location information of the terminal device 200 (S460). The electronic apparatus 100 may obtain location information indicating a real-time location of the terminal device 200. The electronic apparatus 100 may identify whether the location of the terminal device 200 corresponds to a target location.

When the location of the terminal device 200 is the same as the target location, the electronic apparatus 100 may identify that the placement of the terminal device 200 is completed.

When the difference between the location of the terminal device 200 and the target location is less than a threshold value (e.g., 2 ft), the electronic apparatus 100 may identify that the placement of the terminal device 200 is completed.

The electronic apparatus 100 may use an image sensor (e.g., a camera) to identify a real-time location of the terminal device 200. The electronic apparatus 100 may obtain a captured image including the terminal device 200. The electronic apparatus 100 may identify a location of the terminal device 200 based on the captured image.

The electronic apparatus 100 may use a pre-established communication method (e.g., Bluetooth, Wi-Fi, UWB, etc.) to identify a real-time location of the terminal device 200. The electronic apparatus 100 may transmit a communication packet to the terminal device 200 to confirm the location of the terminal device 200. The terminal device 200 may transmit a communication packet responsive to the location confirmation to the electronic apparatus 100. The electronic apparatus 100 may receive the communication packet responsive to the location confirmation from the terminal device 200. The electronic apparatus 100 may identify the location of the terminal device 200 based on the received communication packet.

The electronic apparatus 100 may identify a location of the terminal device 200, and may compare the location of the terminal device 200 to the target location. The electronic apparatus 100 may obtain a distance difference between the location of the terminal device 200 and the target location. When the distance difference is less than a threshold value, the electronic apparatus 100 may identify that the placement of the terminal device 200 is completed.

In one or more examples, the electronic apparatus 100 may obtain the location (fourth location) (or location information) of the terminal device 200 using a pre-established communication method. The electronic apparatus 100 may transmit a signal to the terminal device 200 requesting the terminal device 200 to respond with current location information of the terminal device 200, or with information that the electronic apparatus 100 may use to determine the location of the terminal device 200.

The terminal device 200 may transmit a response signal (or response packet) corresponding to the request signal (or request packet) to the electronic apparatus 100. The electronic apparatus 100 may obtain the fourth location based on the response signal received from the terminal device 200.

The electronic apparatus 100 may obtain relative distance information and relative direction information based on the response signal from the terminal device 200. The electronic apparatus 100 may use the relative distance information and the relative direction information to identify the fourth location.

In one or more examples, the electronic apparatus 100 may use the measured intensity of the response signal to obtain relative distance information.

The response signal may include identification information of the device that sent the response signal and the output strength of the response signal.

The intensity of the response signal may decrease at a certain rate or function as the distance increases. The electronic apparatus 100 may identify (or calculate) the distance between the external device (or terminal device) that output the response signal and the electronic apparatus 100 by comparing the output strength included in the response signal to the measured strength analyzing the response signal.

For example, if the output strength is 100, the measured strength may be 50. The electronic apparatus 100 may identify the location of the electronic apparatus 100 and the external device (or terminal device) that output the response signal based on the value reduced by 50.

In one or more examples, the electronic apparatus 100 may use the time information of the response signal to obtain relative distance information.

The time information of the response signal may include a start time at which the terminal device 200 transmitted the response signal. The electronic apparatus 100 may obtain a difference value between the start time at which the response signal was transmitted and the current arrival time. Based on the difference value, the electronic apparatus 100 may obtain relative distance information between the electronic apparatus 100 and the terminal device 200.

In one or more examples, the electronic apparatus 100 may use an angle of reception of the response signal to obtain relative direction information.

The electronic apparatus 100 may sense an angle of reception of the response signal. The electronic apparatus 100 may identify an output direction of the external device (or terminal device) based on the angle of reception of the response signal.

The electronic apparatus 100 may identify the location of the external device (or terminal device) based on the relative distance information and the relative direction information. The electronic apparatus 100 may identify a relative location of the external device (or terminal device) based on the location of the electronic apparatus 100.

When the placement of the terminal device 200 is completed (S460-Y), the electronic apparatus 100 may provide audio information including an audio signal (S470). The electronic apparatus 100 may transmit the audio information to the terminal device 200.

When the placement of the terminal device 200 is not completed (S460-N), the electronic apparatus 100 may identify whether the placement of the terminal device 200 is completed repeatedly.

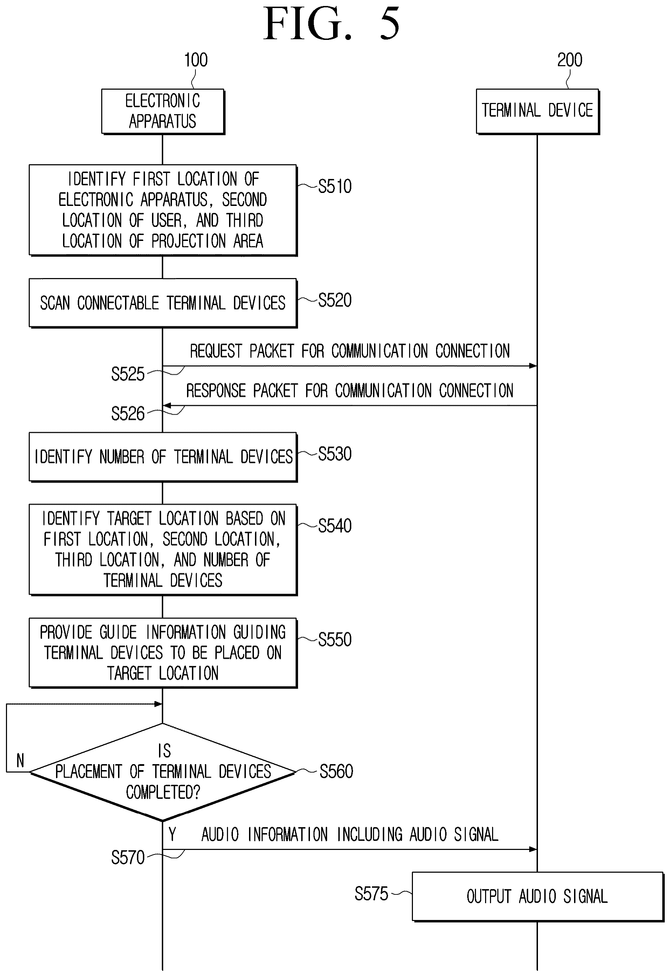

FIG. 5 is a flowchart provided to explain an operation of providing audio information to the terminal device 200 according to one or more embodiments.

Operations S510, S520, S530, S540, S550, S560, and S570 of FIG. 5 may correspond to operations S410, S420, S430, S440, S450, S460, and S470 of FIG. 4, respectively. Redundant descriptions will be omitted.

When the operation of scanning connectable terminal devices is performed, the electronic apparatus 100 may transmit a request packet for establishing a communication connection to the terminal device 200 (S525). The electronic apparatus 100 may output the request packet in a broadcasting manner. The request packet may be described as a request communication packet or a request communication signal.

The terminal device 200 may receive the request packet from the electronic apparatus 100. In response to the request packet, the terminal device 200 may transmit a response packet to the electronic apparatus 100 for establishing a communication connection (S526).

The electronic apparatus 100 may receive the response packet from the terminal device 200. Upon receiving the response packet from the terminal device 200, the electronic apparatus 100 may create a communication session with the terminal device 200. The electronic apparatus 100 may perform communication with the terminal device 200 via the communication session.

Once the communication connection is established, the electronic apparatus 100 may identify the number of terminal device 200 connected to the electronic apparatus 100 (S530). Subsequently, the electronic apparatus 100 may perform operations S540, S550, and S560.

When it is identified that the placement of the terminal device 200 is completed (S560-Y), the electronic apparatus 100 may transmit audio information including an audio signal to the terminal device 200 (S570).

The terminal device 200 may receive audio information from the electronic apparatus 100. The terminal device 200 may output the audio signal included in the audio information (S575).

FIG. 6 is flow chart of an example operation of identifying the number of the terminal device 200 according to one or more embodiments.

Operations S610, S620, S625, S626, S640, S650, S660, S670, and S675 of FIG. 6 may correspond to operations S510, S520, S525, S525, S540, S550, S560, S570, and S575 of FIG. 5. Redundant descriptions will be omitted.

After performing the scanning operation, the electronic apparatus 100 may display a guide screen indicating at least one connectable terminal device (S630-1). This operation will be described with reference to FIG. 7.

The electronic apparatus 100 may receive a user input to select a terminal device to be connected with the electronic apparatus 100 (S630-2). The electronic apparatus 100 may receive a user input to select a terminal device to be connected with the electronic apparatus 100 among at the least one terminal device included in the guide screen. For example, the screen may include a plurality of terminal devices that are connectable to the electronic apparatus 100, where a user selects one of the terminal devices. In one or more examples, the selection of a terminal device may be performed automatically without user input.

The electronic apparatus 100 may identify the number of selected terminal devices based on the user input (S630-3).

Subsequently, operations S640, S650, S660, S670, S675 may be performed.

FIG. 7 is an illustration of an example operation of providing information regarding connectable terminal device 200 according to one or more embodiments.

The electronic apparatus 100 of FIG. 7 may provide a screen 700 that includes information regarding the connectable terminal device 200.

The screen 700 may represent a screen for selecting the terminal device 200 to be connected with the electronic apparatus 100. The screen 700 may include at least one of a UI 710 that guides the selection of the terminal device 200, or a UI 720 that displays a list of connectable terminal devices.

The UI 710 may include information for identifying the terminal device 200 to configure an audio environment. The information included in the UI 710 may include at least one of image data or text data.

The UI 720 may include information about the connectable terminal device 200 obtained based on the result of the scanning operation such as a model name, registration status. In one or more example, the information about the terminal device may also specify information about the owner of the connectable device. The UI 720 may include a list of terminal device 200 that are connectable with the electronic apparatus 100. Via the UI 720, the electronic apparatus 100 may receive a user input indicating whether the at least one terminal device 200 is selected.

In one or more examples, the user input may be a user input not to select any of the connectable terminal device 200.

In one or more examples, the user input may be a user input to select one of the connectable terminal device 200.

In one or more examples, the user input may be a user input to select two or more of the connectable terminal device 200.

In one or more examples, the list of the terminal device 200 included in the UI 720 may include identification information indicating the terminal device 200 (e.g., name, model name, etc.) and/or information about whether the terminal device 200 is pre-registered. Among the connectable terminal device 200, there may be devices that are already registered with the electronic apparatus 100. The list of terminal device 200 included in the UI 720 may include information indicating whether the terminal device 200 is a pre-registered device.

FIG. 8 illustrates an example operation of providing a target location of the terminal device 200 according to one or more embodiments.

Referring to FIG. 8, the electronic apparatus 100 may provide a screen 800 that includes information related to a target location of the terminal device 200.

The screen 800 may include information to guide the placement of the selected (or identified) terminal device 200. The screen 800 may include at least one of a UI 810 indicating the number of selected terminal device 200, a UI 820 guiding the placement of the terminal device 200, a UI 830 indicating a target location of the terminal device 200, a UI 840 for modifying the target location, a UI 850 for changing the terminal device 200, and a UI 860 for entering the completion of the placement. The UIs 820 to 860 may be implemented on one screen of the electronic apparatus 100. The UIs 820 to 860 may be implemented as one UI with segregated areas providing the aforementioned information.

In one or more examples, the UI 810 indicating the number of terminal device 200 may include information about the number of terminal device 200 that will eventually be connected to the electronic apparatus 100.

In one or more examples, the UI 820 that guides the placement of the terminal device 200 may include information that guides the placement of the terminal device 200 to a target location. The guide information may include text information or a visual image.

In one or more examples, the UI 830 indicating a target location for the terminal device 200 may include image information to guide where the terminal device 200 should be placed. The image information may include a location of the terminal device 200. The image information may include identification information of the terminal device 200 that is output at a location within a threshold distance from the location of the terminal device 200. When the location of the terminal device 200 and the identification information of the terminal device 200 are displayed together, the user may easily recognize where to place the terminal device 200.

In one or more examples, the UI 830 may include a UI 831 indicating the current location (fourth location) of the terminal device 200. The UI 831 may be described as virtual image information. The UI 831 may be image information indicating a terminal device. When the current location (fourth location) of the terminal device 200 corresponds to the target location, the electronic apparatus 100 may change the visual setting of the UI 831. The visual setting may change at least one of a border color, a border thickness, an image type (solid line, dotted line, etc.), and a fill color (a color representing the inner region of an image outline). As the visual setting changes, the user may identify that the terminal device 200 is accurately placed on the target location.

The UI 830 may include a UI 832 that guides the user to move to a target location with reference to the current location (fourth location) of the terminal device 200. The UI 832 may include information indicating which direction to move with respect to the UI 831 indicating the current location (fourth location) to be placed on the target location. For example, the UI 832 may include "2 cm to the right" or any other suitable dimension.

The UI 830 may include a UI 833 indicating direction information. The UI 833 may represent a direction guide UI that indicates an absolute direction.

In one or more examples, the UI 830 may include information indicating a target location. The information indicating the target location may include at least one of image information (a UI indicating the target location) or text information (a UI indicating a relative distance of the target location with reference to the second location of the user). For example, the text information may indicate "10 cm to the left", "10 cm to the right", etc.

In one or more examples, the UI 840 for modifying the target location may be a UI for changing the target location provided in the UI 830. The UI 840 may include at least one of an item for guiding to another target location or an item for guiding the user to make a direct modification.

In one or more examples, the UI 850 for changing the terminal device 200 may be a UI related to an operation of changing the selected terminal device 200 in order to configure an audio environment. The UI 850 may include at least one ofan item for changing an already selected specific terminal device to a new terminal device, an item for adding a new terminal device in addition to the already selected specific terminal device, or an item for deleting (or excluding) the already selected specific terminal device.

In one or more examples, the UI 850 for changing the terminal device 200 may include an item for providing a screen indicating connectable terminal devices. When the corresponding item is selected, the electronic apparatus 100 may provide the screen 700 of FIG. 7.

In one or more examples, the UI 860 for inputting the completion of placement may be a UI for receiving a user input. The UI 830 may allow the user to directly place the terminal device 200. When the placement is completed, the user may enter a user input into the electronic apparatus 100 via the UI 830. The electronic apparatus 100 may obtain the user input via the UI 830.

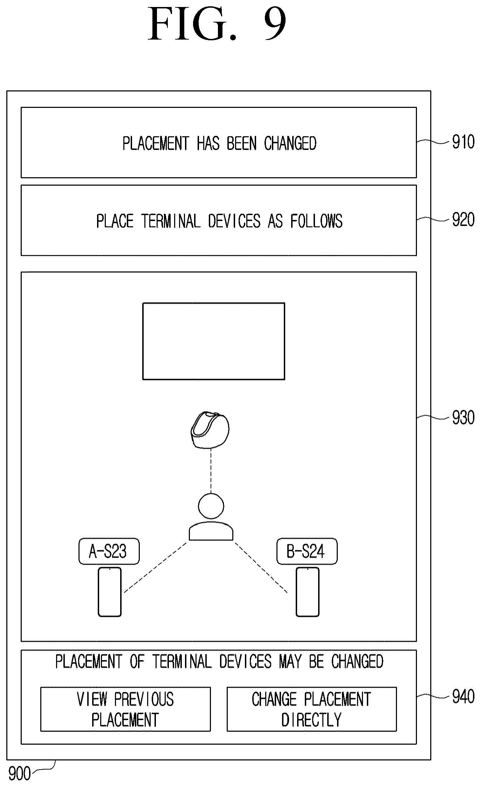

FIG. 9 is an illustration of an example operation of providing a target location of the terminal device 200 according to one or more embodiments.

Referring to FIG. 9, when a user input to change the placement of the terminal device 200 is received, the electronic apparatus 100 may provide a screen 900. The screen 900 may be a screen for guiding the user to a target location that has changed from the initially suggested location. For example, a scenario may occur where after the initial placement of the terminal devices 200, another terminal device may come in the vicinity of the electronic apparatus 100, where connecting the another terminal device to the electronic apparatus 100 may cause one or more the other terminal devices to be moved.

The screen 900 may include at least one of a UI 910 indicating that the placement has changed, a UI 920 guiding the placement of the terminal device 200, a UI 930 indicating the target location of the terminal device 200, or a UI 940 for modifying the target location.

The UI 910 indicating that the placement has changed may include information to indicate that the placement has changed. The UI 910 may include notification information related to the change of placement. The notification information may include text information.

The UI 920 that guides the placement of the terminal device 200 may include information that guides the placement of the terminal device 200 to a target location. The guide information may include text information.

The UI 930 indicating the target location of the terminal device 200 may be different from the target location indicated by the UI 830 of FIG. 8. The electronic apparatus 100 may provide the screen 900 including the UI 930 based on the target location that is different from the target location corresponding to the UI 830.

The UI 940 for modifying the target location may be a UI for changing the target location provided in the UI 930. The UI 940 may include at least one of an item corresponding to outputting a previously provided target location (e.g., UI 830 of FIG. 8) or an item guiding the user to directly modify the target location.

FIG. 10 is an illustration of an example operation of providing information regarding audio setting according to one or more embodiments.

Referring to FIG. 10, the electronic apparatus 100 may provide a screen 1000 related to audio setting. The screen 1000 may include information related to audio setting provided to the terminal device 200.

The screen 1000 may include at least one of a UI 1010 including guide information indicating that audio setting is available, a UI 1030 indicating a target location of the terminal device 200, or a UI 1040 indicating audio setting corresponding to the terminal device 200.

The UI 1010 that includes guide information indicating that audio setting is available, may include text indicating that the screen 1000 includes information related to audio setting.

The UI 1030 indicating the target location of the terminal device 200 may include image information indicating a finally determined target location of the terminal device 200.

The UI 1040 indicating an audio setting corresponding to the terminal device 200 may include an audio setting corresponding to the terminal device 200. The UI 1040 may include at least one ofan item indicating the number of terminal devices 200, an item indicating channel information (e.g., two channels) implemented by the terminal device 200, or an item indicating detailed channel information (e.g., left channel, right channel) corresponding to the terminal device 200.

When there are a plurality of terminal device 200 consisting of an audio environment, the electronic apparatus 100 may provide the UI 1040 that includes detailed channel information corresponding to each of the plurality of terminal device 200. For example, as illustrated in FIG. 10, a stereo environment may be provided in which first terminal device outputs a left channel, and a second terminal device provides a right channel. In one or more examples, the audio settings for each of the connectable terminal devices may be configured such the positioning of the terminal devices at a respective target locations enables a surround sound environment.

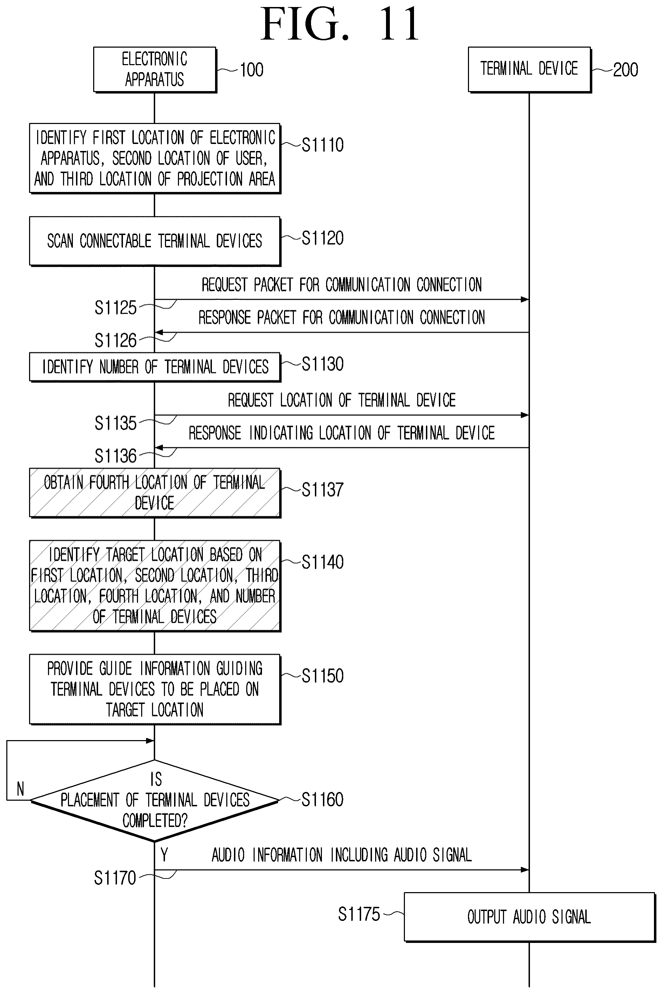

FIG. 11 is a flowchart of an example operation of identifying a target location using a location of the terminal device 200 according to one or more embodiments.

Operations S1110, S1120, S1125, S1126, S1130, S1150, S1160, S1170, and S1175 of FIG. 11 may correspond to operations S510, S520, S525, S526, S530, S550, S560, S570, and S575 of FIG. 5, respectively. Redundant descriptions will be omitted.

After the number of terminal device 200 is identified, the electronic apparatus 100 may request the location of the identified terminal device 200 (S1135). The electronic apparatus 100 may transmit a communication packet requesting the location of the terminal device 200 to the terminal device 200.

In one or more examples, the terminal device 200 may receive the location request from the electronic apparatus 100. The terminal device 200 may transmit a response to the location request to the electronic apparatus 100 (S1136). The terminal device 200 may transmit the response indicating the location of the terminal device 200 to the electronic apparatus 100. The terminal device 200 may transmit a communication packet including the response indicating the location of the terminal device 200 to the electronic apparatus 100.

The electronic apparatus 100 may receive the response indicating the location of the terminal device 200 from the terminal device 200. The electronic apparatus 100 may obtain the location (fourth location) of the terminal device 200 based on the response received from the terminal device 200 (S1137).

The electronic apparatus 100 may identify the target location based on at least one of the location of the electronic apparatus 100 (first location), the location of the user 20 (second location), the location of the projection area 30 (third location), or the location of the terminal device 200 (fourth location) (S1140).

The electronic apparatus 100 may further consider the current location of the terminal device 200 to determine the target location of the terminal device 200.

According to various embodiments, the electronic apparatus 100 may identify the candidate location that is closest to the location of the terminal device 200 (fourth location) among a plurality of candidate locations as the target location.

In determining the target location, the electronic apparatus 100 may identify the plurality of candidate locations. One of the plurality of candidate locations may be selected. One of the plurality of candidate locations may be determined based on a priority or any other suitable criteria. A description of the plurality of candidate locations is provided with reference to FIGS. 19, 22, and 23.

In determining the target location, the electronic apparatus 100 may identify whether a plurality of candidate locations exist.

In one or more examples, in the absence of a plurality of candidate locations, the electronic apparatus 100 may identify the target location without considering the location of the terminal device 200 (fourth location).

If a plurality of candidate locations exist, the electronic apparatus 100 may identify the target location by considering the location of the terminal device 200 (fourth location). The electronic apparatus 100 may determine the candidate location that is closest to the location of the terminal device 200 (fourth location) among the plurality of candidate locations as the target location.

When the target location is determined, operations S1150, S1160, S1170, and S1175 may be performed.

FIG. 12 is a flow chart of an example operation of identifying a target location using performance information of the terminal device 200 according to one or more embodiments.

Operations S1210, S1220, S1225, S1226, S1230, S1250, S1260, and S1275 of FIG. 12 may correspond to operations S510, S520, S525, S526, S530, S550, S560, and S575 of FIG. 5. Redundant descriptions will be omitted.

After performing a scanning operation, the electronic apparatus 100 may request audio performance information from the terminal device 200 (S1227). The audio performance information may include information indicating the performance of a speaker used in outputting an audio signal. The electronic apparatus 100 may transmit a communication packet requesting the audio performance information to the terminal device 200.

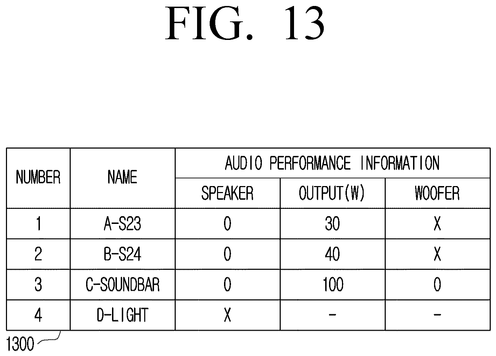

The audio performance information may include at least one of information indicating whether a speaker is included, information indicating the degree of output of an audio signal (e.g., volume level), or information indicating whether a woofer function can be performed, which will be described with reference to FIG. 13.

The terminal device 200 may receive the request for audio performance information from the electronic apparatus 100. The terminal device 200 may transmit the audio performance information to the electronic apparatus 100 in response to the request (S1228). The terminal device 200 may transmit a communication packet including the audio performance information to the electronic apparatus 100.

The electronic apparatus 100 may receive the audio performance information from the terminal device 200. The electronic apparatus 100 may identify the number of the terminal device 200 based on the audio performance information (S1230). The electronic apparatus 100 may determine whether the terminal device 200 is capable of outputting an audio signal based on the audio performance information of the terminal device 200.

If the terminal device 200 does not have a speaker, an audio signal cannot be output. In one or more examples, the electronic apparatus 100 may determine whether to select the terminal device 200 as a device to configure an audio environment based on information about whether the terminal device 200 includes a speaker (speaker presence information) included in the audio performance information of the terminal device 200.

When it is identified that the terminal device 200 does not include a speaker, the electronic apparatus 100 may not select the terminal device 200. The electronic apparatus 100 may exclude the terminal device 200 that does not include a speaker from the device to configure an audio environment. In one or more examples, when the terminal device 200 does not include the speaker, the terminal device 200 may be indicated as not connectable to the electronic apparatus 100 to prevent the terminal device 200 from connecting to the electronic apparatus 100.

The electronic apparatus 100 may determine the target location based on the first location, the second location, the third location, the number of the terminal device 200, and the audio performance information (S1240).

In one or more examples, the audio performance information may include information indicating the output performance of a speaker (speaker output information). The electronic apparatus 100 may determine the target location of the terminal device 200 by considering the output performance. The better the output performance, the further the target location may be from the electronic apparatus 100.

In one or more examples, the audio performance information may include information indicating whether a woofer function is performed (woofer function information). The electronic apparatus 100 may determine the target location of the terminal device 200 capable of performing the woofer function to be disposed in a preset area. For example, the electronic apparatus 100 may determine the target location such that the terminal device 200 capable of performing the woofer function is disposed in front of the user 20. The electronic apparatus 100 may determine the target location such that the terminal device 200 is disposed in a direction facing the first location from the second location.

Once the target location is determined, the electronic apparatus 100 may provide guide information to guide the terminal device 200 to be placed at or near the target location (S1250).

After the guide information is provided, the electronic apparatus 100 may determine whether the terminal device 200 is placed on the target location (S1260).

When the terminal device 200 is placed on the target location (S1260-Y), the electronic apparatus 100 may generate audio information including an audio signal and audio setting. The electronic apparatus 100 may transmit the audio information including the audio signal and the audio setting to the terminal device 200 (S1270). The electronic apparatus 100 may transmit the audio information to the terminal device 200 in the form of a communication packet.

According to various embodiments, the audio signal and the audio setting may be transmitted to the terminal device 200 separately, each without being included in the audio information. The electronic apparatus 100 may transmit the audio signal and the audio setting to the terminal device 200 based on separate communication packets. In one or more examples, the audio setting may be transmitted first, followed by the audio signal. This is because it may take time to analyze and apply the audio setting.

The terminal device 200 may receive the audio information from the electronic apparatus 100. The terminal device 200 may obtain the audio signal and the audio setting from the audio information. The electronic apparatus 100 may output the audio signal based on the audio setting.

For example, the audio setting may include output size setting for outputting the audio signal. The terminal device 200 may output the audio signal based on the output size setting.

FIG. 13 is illustrations a table of example performance information according to one or more embodiments.

Referring to FIG. 13, the electronic apparatus 100 may obtain audio performance information for each of the connectable terminal device 200. A table 1300 may include audio performance information of each of the connectable terminal device 200.

The audio performance information may include at least one of speaker presence information, speaker output information, or woofer function information.

The speaker presence information may represent information that indicates whether a speaker is included.

The speaker output information may indicate the maximum size of electrical signal that can be processed by the speaker. The higher the output value (e.g., W), the louder the speaker can produce sound.

The woofer function information may indicate whether the speaker is capable of performing a woofer function.

The table 1300 may include audio performance information of devices connected to the electronic apparatus 100. The electronic apparatus 100 may use the audio performance information regarding each audio device for an operation to configure an audio environment. As understood by one of ordinary skill in the art, the information in FIG. 13 is merely exemplary, and the audio performance information may include any other suitable device audio characteristics known to one of ordinary skill in the art.

The electronic apparatus 100 may determine whether the terminal device 200 is a device capable of configuring an audio environment based on the speaker presence information included in the audio performance information.

The electronic apparatus 100 may determine output size setting used to output an audio signal from the terminal device 200 based on the speaker output information included in the audio performance information. The output size setting may be included in the audio setting.

Based on the woofer information included in the audio performance information, the electronic apparatus 100 may determine frequency setting used by the terminal device 200 to output an audio signal of a particular frequency band. The frequency setting may be included the audio setting.

The output size setting may vary depending on frequency bands, and the output size setting according to frequency bands may be described as EQ setting. The EQ setting may be included in the frequency setting.

FIG. 14 is a flowchart of an example operation of changing an audio setting by recording an audio signal according to one or more embodiments.

Operations S1450 and S1460 of FIG. 14 may correspond to operations S1250 and S1260 of FIG. 12, respectively. Redundant descriptions will be omitted.

The audio setting described in FIG. 12 will be described as first audio setting.

After providing the guide information, the electronic apparatus 100 may obtain first audio information including an audio signal and the first audio setting. The electronic apparatus 100 may transmit the first audio information to the terminal device 200 (S1470).

The terminal device 200 may receive the first audio information. The terminal device 200 may obtain the audio signal and the first audio setting from the first audio information. The terminal device 200 may output the audio signal based on the first audio setting (S1475).

After transmitting the first audio information to the terminal device 200, the electronic apparatus 100 may perform an operation to record an ambient audio signal. After the audio signal is output from the terminal device 200 based on the first audio setting, the electronic apparatus 100 may record the audio signal output from the terminal device 200.

The electronic apparatus 100 may obtain audio data, which is a recording of the audio signal output from the terminal device 200 (S1480). The electronic apparatus 100 may change the first audio setting to second audio setting based on the audio data.

The electronic apparatus 100 may determine whether the recorded audio signal corresponds to the audio signal transmitted by the electronic apparatus 100.

The first audio setting may include an output size setting for the speaker. In one or more examples, it is assumed that the output size setting is a first level. The electronic apparatus 100 may transmit audio information for outputting the audio signal at the first level to the terminal device 200. When the audio signal is output at the first level from the terminal device 200, the electronic apparatus 100 may predict at what level the audio signal is measured at the location of the electronic apparatus 100. The electronic apparatus 100 may obtain an estimated level as a result of the prediction.

To obtain the estimated level, the electronic apparatus 100 may perform the operations in the embodiment of FIG. 11. For example, the electronic apparatus 100 may obtain the location of the terminal device 200 (fourth location). The electronic apparatus 100 may obtain the estimated level based on the location of the electronic apparatus 100 (first location), the location of the terminal device 200 (fourth location), and the first level.

According to various embodiments, the first location and the fourth location may be used as relative distances. The electronic apparatus 100 may obtain distance information to the location of the terminal device 200 (fourth location) with reference to the first location. For example, the location of the terminal device 200 (fourth location) may represent a distance at which the terminal device 200 is distant from the electronic apparatus 100 with reference to the electronic apparatus 100.

The intensity of the audio signal may decrease as it moves from the output location to the measurement location. The longer the distance between the output location and the measurement location, the audio signal may become less intense.

The electronic apparatus 100 may estimate the intensity of the audio signal based on a preset function. The preset function may be a function that calculates the reduction rate of the audio signal according to distance. The preset function may be different for each output size (e.g.,, the intensity output at the initial time point) of the audio signal. The electronic apparatus 100 may obtain an estimated level as a result of the prediction.

The electronic apparatus 100 may obtain audio data by recording the audio signal output by the terminal device 200. The electronic apparatus 100 may obtain the intensity of the audio signal included in the audio data as a measured level.

The electronic apparatus 100 may compare the estimated level to the measured level.

Based on the difference between the estimated level and the measured level, the electronic apparatus 100 may determine whether to change the audio setting.

In one or more examples, when the difference value obtained by subtracting the estimated level from the measured level is equal to or greater than a first threshold value (positive number), the electronic apparatus 100 may change the audio setting (e.g., EQ setting) such that the audio signal is output at a second level that is smaller than the first level.

In one or more examples, when the difference value obtained by subtracting the estimated level from the measured level is less than a second threshold value (negative number), the electronic apparatus 100 may change the audio setting (EQ setting) such that the audio signal is output at a third level that is greater than the first level.

In one or more examples, when the difference value obtained by subtracting the estimated level from the measured level is less than the first threshold value (positive number) or equal to or greater than the second threshold value (negative number), the electronic apparatus 100 may maintain the first level. The electronic apparatus 100 may not change the audio setting.

Based on the comparison result, the electronic apparatus 100 may change the first audio setting (first level) to the second audio setting (second level or third level).

The electronic apparatus 100 may maintain the first audio setting (first level) based on the comparison result.

The electronic apparatus 100 may obtain second audio information including the audio signal and the second audio setting. The electronic apparatus 100 may transmit the second audio information to the terminal device 200 (S1490).

Like the first audio information, the audio signal and the second audio setting may be transmitted to the terminal device 200 in separate communication packets or in the same communication packet.

The terminal device 200 may receive the second audio information. The terminal device 200 may obtain the audio signal and the second audio setting included in the second audio information. The terminal device 200 may output the audio signal based on the second audio setting (S1495).

FIG. 15 is a flowchart of an example operation of changing a target location by recording an audio signal according to one or more embodiments.

Operations S1550, S1560, S1570, S1575, and S1580 of FIG. 15 may correspond to operations S1450, S1460, S1470, S1475, and S1480 of FIG. 14, respectively. Redundant descriptions will be omitted.

The initially identified target location may be described as the first target location.

The electronic apparatus 100 may change the first target location to the second target location based on the audio data.

The process of obtaining the estimated level and the measured level disclosed in the embodiment of FIG. 14 may be equally applicable in FIG. 15.

Based on the difference vale between the estimated level and the measured level, the electronic apparatus 100 may determine whether to change the target location.

In one or more examples, when the difference value obtained by subtracting the estimated level from the measured level is equal to or greater than the first threshold value (positive number), the electronic apparatus 100 may determine the second target location is farther than the first target location with reference to the electronic apparatus 100.

In one or more examples, when the difference value obtained by subtracting the estimated level from the measured level is less than the second threshold value (negative value), the electronic apparatus 100 may determine the third target location is closer than the first target location with respect to the electronic apparatus 100.

In one or more examples, when the difference value obtained by subtracting the estimated level from the measured level is less than the first threshold value (positive number) or equal to or greater than the second threshold value (negative number), the electronic apparatus 100 may maintain the first level. The electronic apparatus 100 may not change the target location.

The electronic apparatus 100 may change the first target location to the second target location (or third target location) based on the comparison result.

The electronic apparatus 100 may maintain the first target location based on the comparison result.

The electronic apparatus 100 may provide guide information to guide the terminal device 200 to be placed on the changed target location (second target location or third target location) (S1590).

The guide information mentioned in S1550 may be described as first guide information or a first guide screen. The guide information mentioned in S1590 may be described as second guide information or a second guide screen.

After the second guide information is provided, the electronic apparatus 100 may identify whether the placement of the terminal device is completed. The electronic apparatus 100 may repeat operations S1560 to S1590.

When it is determined that the target location is maintained, the electronic apparatus 100 may not repeat operations S1560 to S1590.

When the absolute value of the difference value obtained by subtracting the estimated level from the measured level is equal to or greater than a third threshold value, the electronic apparatus 100 may change the audio setting as shown in the embodiment of FIG. 14.

When the absolute value of the difference value obtained by subtracting the estimated level from the measured level is less than the third threshold value, the electronic apparatus 100 may change the target location as shown in the embodiment of FIG. 15.

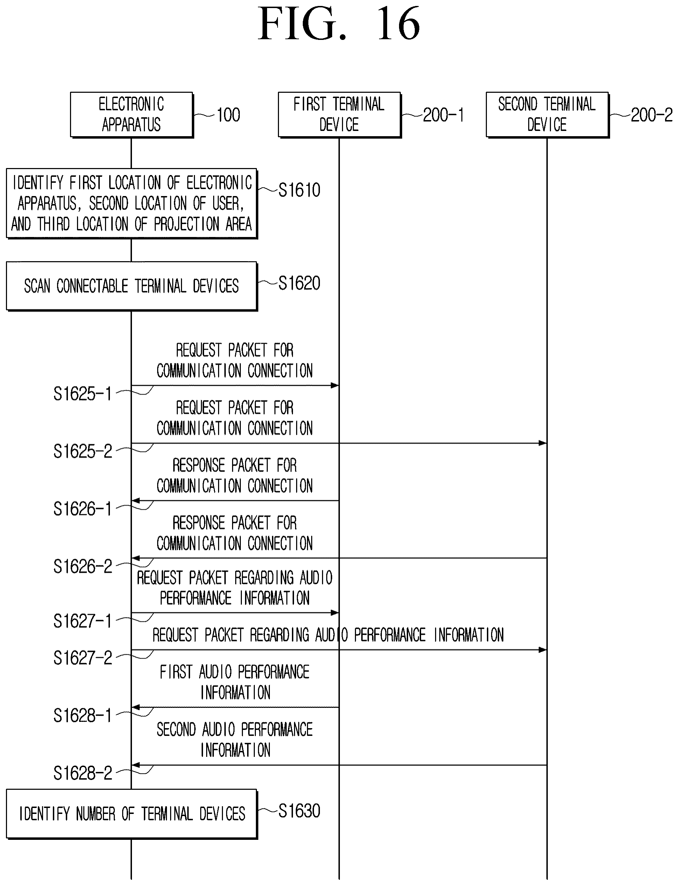

FIG. 16 is a flowchart of an example operation of providing a target location of a plurality of terminal devices according to one or more embodiments.

Operations S1610 and S1620 of FIG. 16 may correspond to operations S510 and S520 of FIG. 5. Redundant descriptions will be omitted.

The terminal device 200 may include a first terminal device 200-1 and a second terminal device 200-2.

The electronic apparatus 100 may transmit a request packet for establishing a communication connection to the first terminal device 200-1 (S1625-1). The electronic apparatus 100 may transmit a request packet for a communication connection to the second terminal device 200-2 (S1625-2).

The first terminal device 200-1 may receive the request packet for establishing a communication connection from the electronic apparatus 100. In response to the request packet, the first terminal device 200-1 may transmit a response packet for establishing the communication connection to the electronic apparatus 100 (S1626-1).

The second terminal device 200-2 may receive the request packet for establishing a communication connection from the electronic apparatus 100. In response to the request packet, the second terminal device 200-2 may transmit a response packet for establishing the communication connection to the electronic apparatus 100 (S1626-2).

The electronic apparatus 100 may transmit a request packet for audio performance information to the first terminal device 200-1 (S1627-1). The electronic apparatus 100 may transmit a request packet for audio performance information to the second terminal device 200-2 (S1627-2).

The request packet for audio performance information may include information requesting that information related to the audio performance of the device receiving the packet be transmitted.

The first terminal device 200-1 may receive the request packet for audio performance information from the electronic apparatus 100. In response to the request packet for audio performance information, the first terminal device 200-1 may transmit first audio performance information to the electronic apparatus 100.

The second terminal device 200-2 may receive the request packet for audio performance information from the electronic apparatus 100. In response to the request packet for audio performance information, the second terminal device 200-2 may transmit second audio performance information to the electronic apparatus 100.

The electronic apparatus 100 may identify the number of terminal devices to be connected to the electronic apparatus 100 based on the first audio performance information received from the first terminal device 200-1 and the second audio performance information received from the second terminal device 200-2 (S1630).

In one or more examples, the electronic apparatus 100 may obtain speaker presence information from the audio performance information. The audio performance information may directly specify the speaker presence information, or the audio performance information may include information that the electronic apparatus 100 may use to determine whether a terminal device 200 includes a speaker. Based on the speaker presence information, the electronic apparatus 100 may determine whether the terminal device includes a speaker. When the terminal device does not include a speaker, the electronic apparatus 100 may not connect with the terminal device. The electronic apparatus 100 may not include a terminal device that does not include a speaker in the audio environment. The electronic apparatus 100 may implement an audio environment with only terminal devices that include a speaker.

Based on the first audio performance information received from the first terminal device 200-1, the electronic apparatus 100 may identify whether the first terminal device 200-1 includes a speaker.

Based on the second audio performance information received from the second terminal device 200-2, the electronic apparatus 100 may identify whether the second terminal device 200-2 includes a speaker.

The electronic apparatus 100 may identify the number of terminal devices that include a speaker.

The request packet of operation S1625-1 and operation S1625-2 may be described as a first request packet. The first request packet may be transmitted in a first communication method. The communication method may be any suitable wireless communication method known to one of ordinary skill in the art. The first request packet may be transmitted in a broadcasting manner without determining a destination device.

The request packet of operation S1627-1 and operation S1627-2 may be described as a second request packet. The second request packet may be transmitted in a second communication method. The second request packet may be transmitted using a communication packet in a form where a destination device is determined. The first request packet and the second request packet may be transmitted in different communication methods.

FIG. 17 is a flowchart of an example operation of providing a target location of a plurality of terminal devices according to one or more embodiments.

Operation S1730 of FIG. 17 may correspond to operation S1630 of FIG. 16. Redundant descriptions will be omitted. Operations S1610 to S1630 of FIG. 16 may be applied to the embodiment of FIG. 17.

After identifying the number of terminal devices to be connected to the electronic apparatus 100, the electronic apparatus 100 may identify a target location based on the first location, the second location, the third location, the number of terminal devices, and the audio performance information (S1745).

The target location may refer to the target location of the first terminal device 200-1 and the target location of the second terminal device 200-2. The target location of the first terminal device 200-1 may be described as the first target location, and the target location of the second terminal device 200-2 may be described as the second target location.

The first target location and the second target location of FIG. 15 and the first target location and second target location of FIG. 17 may be determined according to different concepts. The embodiment of FIG. 15 may be applied to FIG. 17. When the first target location of FIG. 17 changes, it may be described as the third target location, and when the second target location of FIG. 17 changes, it may be described as the fourth target location.

In one or more examples, the target location may vary depending on the audio performance information. For example, the target location may vary depending on speaker output size information, woofer function information, or any other suitable criteria. The electronic apparatus 100 may determine the target location such that the larger the speaker output size, the more distant the target location with reference to the electronic apparatus 100. The electronic apparatus 100 may determine the target location such that the location of the terminal device capable of performing a woofer function is placed at a preset location (in front of the user location (second location)).

The electronic apparatus 100 may provide guide information to guide the first terminal device 200-1 and the second terminal device 200-2 to be placed on the target location (S1750).

The electronic apparatus 100 may obtain the first audio signal and the second audio signal based on the target location and the audio performance information (S1755).

The electronic apparatus 100 may obtain the first audio signal based on the first target location and the first audio performance information. The electronic apparatus 100 may generate the first audio signal using the first audio performance information related to the first target location and the first terminal device 200-1 to output the audio signal.

The electronic apparatus 100 may obtain the audio signal based on at least one of the third location of the projection area 30, the target location of the terminal device 200, or the audio performance information.

According to one or more embodiments, the electronic apparatus 100 may obtain the audio signal based on the third location and the target location (first target location, second target location). The electronic apparatus 100 may obtain the audio signal based on the third location of the projection area 30 and the target location of the terminal device 200. The target location may be a location from which the audio signal is output.

The electronic apparatus 100 may identify a relative location of the target location with reference to the projection area 30. For example, the relative location may be user for specifying a distance and direction with respect to the projection area 30.

The electronic apparatus 100 may identify the first embodiment in which the target location is located in the front of the projection area 30.

The electronic apparatus 100 may identify the second embodiment in which the target location is located on the right front side of the projection area 30. The target location located on the right front side of the projection area 30 may exist in the left area in the direction in which the user 20 looks at the projection area 30

The electronic apparatus 100 may identify the third embodiment in which the target location is located on the left front side of the projection area 30. The target location located on the left front side of the projection area 30 may exist in the right area in the direction in which the user looks at the projection area 30.

The electronic apparatus 100 may identify a first relative location of the first target location with reference to the third location, and obtain a first audio signal based on the first relative location.

The electronic apparatus 100 may identify a second relative location of the second target location with reference to the third location, and obtain a second audio signal based on the second relative location.

According to one or more embodiments, the electronic apparatus 100 may obtain channel information based on the third location and the target location, and may obtain an audio signal based on the obtained channel information. The channel information may include information indicating on which channel the terminal device is performing a function.

For example, two channels may include a first channel (left channel) and a second channel (right channel). The channel information may include information indicating to which channel each of the first terminal device 200-1 and the second terminal device 200-2 outputs as the audio signal.

The channel information may include information indicating that the first terminal device 200-1 operates on the first channel. The channel information may include information indicating that the second terminal device 200-2 operates on the second channel.

The electronic apparatus 100 may obtain the audio signal by considering the channel information.

When it is identified that the first terminal device 200-1 corresponds to the first channel, the electronic apparatus 100 may obtain a first audio signal corresponding to the first channel, and transmit the first audio signal to the first terminal device 200-1.

When it is identified that the second terminal device 200-2 corresponds to the second channel, the electronic apparatus 100 may obtain a second audio signal corresponding to the second channel, and transmit the second audio signal to the second terminal device 200-2.

According to one or more embodiments, the electronic apparatus 100 may obtain the audio signal based on the third location, the target location, and the audio performance information.

The electronic apparatus 100 may further use the audio performance information to obtain the audio signal. For example, the audio performance information may include woofer function information. The electronic apparatus 100 may provide an audio signal in which a low frequency band is emphasized, to a terminal device capable of performing a woofer function. The electronic apparatus 100 may identify whether the terminal device 200 is capable of performing a woofer function based on the audio performance information. When the terminal device 200 is capable of performing the woofer function, the electronic apparatus 100 may generate an audio signal corresponding to the woofer function.

The audio signal corresponding to the woofer function may indicate an audio signal in which a preset frequency band (e.g., low frequency band) is emphasized. The audio signal in which a preset frequency band is emphasized may include an audio signal having a preset frequency band with a greater intensity (or amplitude) than a frequency band other than the preset frequency band.

The electronic apparatus 100 may provide a normal audio signal to the terminal device 200 that is not capable of performing the woofer function. The normal audio signal may indicate an audio signal in which a specific frequency band is not emphasized.

The electronic apparatus 100 may obtain a first relative location of the first target location with reference to the third location. The electronic apparatus 100 may obtain the first audio signal based on the first relative location and the first audio performance information.

The electronic apparatus 100 may obtain a second relative location of the second target location with reference to the third location. The electronic apparatus 100 may obtain the second audio signal based on the second relative location and the second audio performance information.

According to one or more embodiments, the electronic apparatus 100 may obtain channel information based on the third location and the target location, and may obtain the audio signal based on the obtained channel information and the audio performance information.

The electronic apparatus 100 may obtain the first relative location of the first target location with reference to the third location. Based on the first relative location, the electronic apparatus 100 may obtain first channel information corresponding to the first terminal device 200-1. The electronic apparatus 100 may obtain the first audio signal based on the first channel information and the first audio performance information.

The electronic apparatus 100 may obtain the second relative location of the second target location with reference to the third location. The electronic apparatus 100 may obtain second channel information corresponding to the second terminal device 200-2 based on the second relative location. The electronic apparatus 100 may obtain the second audio signal based on the second channel information and the second audio performance information.

The electronic apparatus 100 may obtain an audio setting based on the third location, the target location, and the audio performance information (S1756).

The electronic apparatus 100 may obtain the audio setting based on speaker output information included in the audio performance information. The electronic apparatus 100 may determine an output size for outputting the audio signal in consideration of the speaker output performance. The electronic apparatus 100 may determine an output size maximum value based on the speaker output information. The output size may be described as an intensity value of the audio signal, a magnitude value of the audio signal, an output value of the audio signal, or any other suitable value.

The electronic apparatus 100 may obtain audio setting based on the woofer function information included in the audio performance information. The electronic apparatus 100 may provide the audio setting corresponding to the woofer function to the terminal device 200 capable of performing the woofer function.

The audio setting corresponding to the woofer function may include setting in which the output size of the preset frequency band is applied to be greater than the output size of a frequency band other than the preset frequency band.

For example, the audio setting corresponding to the woofer function may include information for setting the output size of a first frequency band (a preset frequency band) to a first level, and setting the output size of a second frequency band (different from the first frequency band) to a second level (less than the first level).

According to one or more embodiments, the electronic apparatus 100 may obtain the first relative location of the first target location with reference to the third location. The electronic apparatus 100 may obtain first audio setting based on the first relative location and the first audio performance information.

The electronic apparatus 100 may obtain the second relative location of the second target location with reference to the third location. The electronic apparatus 100 may obtain second audio setting based on the second relative location and the second audio performance information.

According to one or more embodiments, the electronic apparatus 100 may obtain channel information based on the third location and the target location, and may obtain audio setting based on the obtained channel information and the audio performance information.

The electronic apparatus 100 may obtain the first relative location of the first target location with reference to the third location. Based on the first relative location, the electronic apparatus 100 may obtain first channel information corresponding to the first terminal device 200-1. The electronic apparatus 100 may obtain the first audio setting based on the first channel information and the first audio performance information.

The electronic apparatus 100 may obtain the second relative location of the second target location with reference to the third location. The electronic apparatus 100 may obtain second channel information corresponding to the second terminal device 200-2 based on the second relative location. The electronic apparatus 100 may obtain the second audio setting based on the second channel information and the second audio performance information.

The electronic apparatus 100 may determine equalizer (EQ) setting based on the woofer function information included in the audio performance information. The electronic apparatus 100 may apply EQ setting to emphasize low sound with respect to the terminal device 200 capable of performing the woofer function. The electronic apparatus 100 may identify EQ setting that increases a gain value for a frequency band in a critical range. A first gain value for the frequency band in the critical range may be greater than a second gain for the frequency band in the critical range. The critical range may indicate a low frequency band corresponding to low sound.

According to one or more embodiments, the operation regarding the woofer function may be performed separately from the processing of the audio signal. The processing for the woofer function may be performed on the audio signal itself regardless of the audio setting.

According to one or more embodiments, the operation regarding the woofer function may be may be performed separately from of the audio setting. The audio signal may be equally transmitted to each terminal device and the woofer function may be implemented via the audio setting.

According to one or more embodiments, the operation regarding the woofer function may be performed separately from both the audio signal and the audio setting. The processing for the woofer function may be performed on the audio signal, and setting for the woofer function may be also applied in the audio setting.

In operation S1760, it is determined whether the placement of the terminal devices is completed. If the placement is completed, the process proceeds to operation S1770-1. If the placement is not completed, the operation returns to S1760 and waits until the placement of the terminal devices is completed. In operation S1770-1, the electronic apparatus 100 transmits first audio information including the first audio signal and the first audio setting to the first terminal device 200-1. In operation S1770-2, the electronic apparatus 100 transmits the second audio information including the second audio signal and the second audio setting to the second terminal device 200-2. In operation S1755-1, the first terminal device 200-1 outputs the first audio signal based on the first audio setting. In operation S1775-2, the second terminal device 200-2 outputs the second audio signal based on the second audio setting.

FIG. 18 is an illustration of an example target location of one terminal device according to one or more embodiments.

According to one or more embodiments 1800 of FIG. 18 illustrates a situation in which one terminal device 200 is connected to the electronic apparatus 100. The electronic apparatus 100 may identify the number of terminal device 200 as one. The location of the electronic apparatus 100 may be first location P1. The location of the user 20 may be a second location P2. The location of the projection area 30 may be a third location P3.

The electronic apparatus 100 may identify the second location P2 of the user 20 with reference to the first location P1 of the electronic apparatus 100. The electronic apparatus 100 may identify the third location P3 of the projection area 30 with reference to the first location P1.

The electronic apparatus 100 may identify an imaginary first straight line 1801 connecting the first location P1 and the second location P2. The electronic apparatus 100 may identify first distance D1 between the first location P1 and the second location P2 within the first straight line 1801. The electronic apparatus 100 may identify a location distant from the second location P2 by the first distance D1 on the first straight line 1801 as target location PT.

In determining the target location PT, the electronic apparatus 100 may identify a location distant from the second location P2 by the first distance D1 in a direction opposite to the first location P1.

The electronic apparatus 100 may generate guide information to guide the terminal device 200 to be placed on the target location PT, and may provide the guide information.

FIG. 19 is an illustrations of an example target location of one terminal device according to one or more embodiments in an example environment 1900.

First straight line 1901, first location P1, second location P2, and first distance D1 of FIG. 19 may correspond to the first straight line 1801, the first location P1, the second location P2, and the first distance D1 of FIG. 18, respectively. Redundant descriptions will be omitted.

The electronic apparatus 100 may have a plurality of locations distant from the second location P2 by the first distance D1 on the first straight line 1801. The plurality of locations may be first candidate location PT1 and second candidate location PT2.

The electronic apparatus 100 may identify the plurality of candidate locations PT1, PT2. Once the plurality of candidate locations PT1, PT2 are identified, the electronic apparatus 100 may identify third location P3 of the projection area 30. The electronic apparatus 100 may identify the location PT2 that is closer to the third location P3 of the plurality of candidate locations PT1, PT2 as audio setting target location PT.

The electronic apparatus 100 may identify the number of candidate locations. The electronic apparatus 100 may identify whether the number of candidate locations is greater than the number of terminal devices. When the number of candidate locations is greater than the number of terminal devices, the electronic apparatus 100 may identify the third location P3. The electronic apparatus 100 may identify a candidate location closer to the third location P3 as a final target location such that the number of target locations is equal to the number of terminal devices.

The electronic apparatus 100 may identify the final target location PT as the second candidate location PT2. In the embodiment of FIG. 19, the target location PT may be the same as the second candidate location PT2, the first location P1.

The electronic apparatus 100 may generate guide information to guide the terminal device 200 to be placed on the target location PT, and may provide the guide information.

According to various embodiments, the electronic apparatus 100 may determine a location PT2 that is farthest from the third location P3 of the plurality of candidate locations PT1, PT2 as the final target location PT.

FIG. 20 is an illustrations of an example target location of two terminal devices according to one or more embodiments.

First straight line 2001, first location P1, second location P2, first distance D1, first candidate location PT1, and second candidate location PT2 of FIG. 20 may correspond to the first straight line 1901, the first location P1, the second location P2, the first distance D1, the first candidate location PT1, and the second candidate location PT2 of FIG. 19, respectively. Redundant descriptions will be omitted.

An embodiment 2000 of FIG. 20 illustrates a situation in which the first terminal device 200-1 and the second terminal device 200-2 are connected to the electronic apparatus 100. The electronic apparatus 100 may identify the number of terminal device 200-1, 200-2 as two.

The electronic apparatus 100 may identify whether the number of terminal device 200-1, 200-2 and the number of candidate locations PT1, PT2 are the same. When the number of terminal device 200-1, 200-2 and the number of candidate locations PT1, PT2 are the same, the electronic apparatus 100 may determine the target location such that a terminal device is placed on one of the candidate locations PT1, PT2.

The electronic apparatus 100 may determine the first target location PT1 such that the first terminal device 200-1 is placed on the first candidate location PT1. The electronic apparatus 100 may determine the second target location PT2 such that the second terminal device 200-2 is placed on the second candidate location PT2.

When there are a plurality of candidate locations and a plurality of terminal devices, placement criteria for which terminal device to be placed on which location may be stored in the electronic apparatus 100. The placement criteria may be used for specifying placing the terminal devices to achieve a desired audio environment (e.g., surround sound).

According to one or more embodiments, the electronic apparatus 100 may randomly place a terminal device on a candidate location.

According to one or more embodiments, the electronic apparatus 100 may place terminal devices on candidate locations by matching the order in which the candidate locations are identified with the order in which they are connected to the electronic apparatus 100. For example, when the first candidate location PT1 is identified first during the calculation process and the device first connected to the electronic apparatus 100 is the first terminal device 200-1, the electronic apparatus 100 may determine the first target location PT1 such that the first terminal device 200-1 is placed on the first candidate location PT1.

According to one or more embodiments, the electronic apparatus 100 may place terminal devices on candidate locations based on at least one of a priority of the candidate locations or a priority of the terminal devices.

The electronic apparatus 100 may assign a preset priority to the candidate locations.

In one or more examples, the electronic apparatus 100 may determine that a candidate location that is closer to the third location P3 has a higher priority.

In one or more examples, the electronic apparatus 100 may determine that a candidate location closer to the first location P1 has a higher priority.

In one or more examples, the electronic apparatus 100 may analyze audio performance information for each of the plurality of terminal devices to determine that a terminal device capable of performing a woofer function has a higher priority.

In one or more examples, the electronic apparatus 100 may analyze audio performance information for each of the plurality of terminal devices to determine that a terminal device with higher speaker output information (output value) has a higher priority.

The electronic apparatus 100 may determine a target location for each terminal device by matching the priority of the candidate locations with the priority of the terminal devices.

For example, the electronic apparatus 100 may assign a first priority to the first candidate location PT1 that is closer to the third location P3 among the plurality of candidate locations PT1, PT2, and a second priority to the remaining second candidate location PT2.

The electronic apparatus 100 may assign a first priority to the first terminal device 200-1 that is capable of performing the woofer function among the plurality of terminal device 200-1, 200-2 and a second priority to the second terminal device 200-2 that is not capable of performing the woofer function.

The electronic apparatus 100 may determine the first target location PT1 such that the first terminal device 200-1 of the first priority is placed on the first candidate location PT1 of the first priority. The electronic apparatus 100 may determine the second target location PT2 such that the second terminal device 200-2 of the second priority is placed on the second candidate location PT2 of the second priority.

The electronic apparatus 100 may generate guide information to guide the first terminal device 200-1 to be placed on the first target location PT1 and the second terminal device 200-2 to be placed on the second target location PT2, and may provide the guide information.

FIG. 21 is an illustration of an example target location of two terminal devices according to one or more embodiments.

First straight line 2001, first location P1, second location P2, and first distance D1 of FIG. 21 may correspond to the first straight line 1801, the first location P1, the second location P2, and the first distance D1 of FIG. 18, respectively. Redundant descriptions will be omitted.

An embodiment 2100 of FIG. 21 illustrates a situation in which the first terminal device 200-1 and the second terminal device 200-2 are connected to the electronic apparatus 100. The electronic apparatus 100 may identify the number of terminal device 200 as two.

When the number of terminal devices is two, the electronic apparatus 100 may identify an imaginary second straight line 2102 perpendicular to a first straight line 2101. The electronic apparatus 100 may identify a plurality of candidate locations distant from the second location P2 by the first distance D1 on the second straight line 2102 with reference to the second location P2.

The plurality of candidate locations may be the first candidate location PT1 and the second candidate location PT2. The electronic apparatus 100 may determine a final target location such that the plurality of terminal device 200-1, 200-2 are disposed on the plurality of candidate locations PT1, PT2, respectively.

The electronic apparatus 100 may determine the first target location PT1 such that the first terminal device 200-1 is placed on the first candidate location PT1. The electronic apparatus 100 may determine the second target location PT2 such that the second terminal device 200-2 is placed on the second candidate location PT2.

A description of which terminal devices are mapped to a plurality of candidate locations is provided in FIG. 20. Redundant descriptions will be omitted.

The electronic apparatus 100 may generate guide information to guide the first terminal device 200-1 to be placed on the first target location PT1 and the second terminal device 200-2 to be placed on the second target location PT2, and may provide the guide information.

FIG. 22 is an illustration of an example target location of two terminal devices according to one or more embodiments.

First straight line 2201, first location P1, second location P2, and first distance D1 of FIG. 22 may correspond to the first straight line 1801, first location P1, second location P2, and first distance D1 of FIG. 18. Redundant descriptions will be omitted.

An embodiment 2200 of FIG. 22 illustrates a situation in which the first terminal device 200-1 and the second terminal device 200-2 are connected to the electronic apparatus 100. The electronic apparatus 100 may identify the number of terminal device 200 as two.

The electronic apparatus 100 may identify an imaginary second straight line 2202 and an imaginary third straight line 2203 that differ from the first straight line 2201 by 120 degrees (or 60 degrees).

The first straight line 2201, the second straight line 2202, and the third straight line 2203 may be inclined at the same angle to each other. The inclination of the first straight line 2201 and the second straight line 2202 may be 120 degrees (or 60 degrees). The inclination of the first straight line 2201 and the second straight line 2203 may be 120 degrees (or 60 degrees). The inclination of the second straight line 2202 and the third straight line 2203 may be 120 degrees (or 60 degrees). The larger angle difference between the two straight lines may be 120 degrees, and the smaller angle difference may be 60 degrees.

The electronic apparatus 100 may identify the first candidate location PT1 and the second candidate location PT2 that are distant from the second location P2 by the first distance D1 on the second straight line 2202.

The electronic apparatus 100 may determine one of the first candidate location PT1 and the second candidate location PT2 as the first target location where the first terminal device 200-1 is placed. The electronic apparatus 100 may prioritize a location that is further from the third candidate location P3 among the plurality of candidate locations.

The electronic apparatus 100 may determine the location PT1 that is further from the third location P3 between the first candidate location PT1 and the second candidate location PT2 as the first target location.

The electronic apparatus 100 may identify the third candidate location PT3 and the fourth candidate location PT4 that are distant from the second location P2 by the first distance D1 on the third straight line 2203.

The electronic apparatus 100 may determine one of the third candidate location PT3 and the fourth candidate location PT4 as the second target location where the second terminal device 200-2 is placed. The electronic apparatus 100 may prioritize a location that is further from the third location P3 among the plurality of candidate locations.

The electronic apparatus 100 may determine the location PT3 that is further from the third location P3 between the third candidate location PT3 and the fourth candidate location PT4 as the second target location.

The electronic apparatus 100 may generate guide information to guide the first terminal device 200-1 to be placed on the first target location PT1 and the second terminal device 200-2 to be placed on the second target location PT3, and may provide the guide information.

FIG. 23 is an illustration of an example target location of two terminal devices according to one or more embodiments.

First straight line 2301, second straight line 2302, third straight line 2303, first location P1, second location P2, third location P3, and first distance D1 of FIG. 23 may correspond to the first straight line 2201, the second straight line 2202, the third straight line 2203, the first location P1, the second location P2, the third location P3, and the first distance D1 of FIG. 22, respectively. Redundant descriptions will be omitted.

Unlike FIG. 22, the electronic apparatus 100 may prioritize a location close to the third location P3 among the plurality of candidate locations.

The electronic apparatus 100 may determine the location PT2 closer to the third location P3 between the first candidate location PT1 and the second candidate location PT2 as the first target location.

The electronic apparatus 100 may determine the location PT4 closer to the third location P3 between the third candidate location PT3 and the fourth candidate location PT4 as the second target location.

The electronic apparatus 100 may generate guide information to guide the first terminal device 200-1 to be placed on the first target location PT2 and the second terminal device 200-2 to be placed on the second target location PT4, and may provide the guide information.

FIG. 24 is an illustration of an example target location of three terminal devices according to one or more embodiments.

First straight line 2401, first location P1, second location P2, first distance D1, first candidate location PT1, and second candidate location PT2 of FIG. 24 may correspond to the first straight line 1901, the first location P1, the second location P2, the first distance D1, the first candidate location PT1, and the second candidate location PT2 of FIG. 19, respectively. Redundant descriptions will be omitted.

According to one or more embodiments, the environment 2400 of FIG. 24 illustrates a situation in which the first terminal device 200-1, the second terminal device 200-2, and the third terminal device 200-3 are connected to the electronic apparatus 100. The electronic apparatus 100 may identify the number of terminal device 200 as three.

The electronic apparatus 100 may identify the first candidate location PT1 and the second candidate location PT2 that are distant from the second location P2 by the first distance D1 on the first straight line 2401.

The electronic apparatus 100 may prioritize a location that is further from the third location P3 among the plurality of candidate locations. The electronic apparatus 100 may determine the location PT1 that is further from the third location P3 between the first candidate location PT1 and the second candidate location PT2 as the first target location.

The electronic apparatus 100 may identify an imaginary second straight line 2402 perpendicular to a first straight line 2401 with reference to the second location P2. The electronic apparatus 100 may identify the third candidate location PT3 and the fourth candidate location PT4 that are distant from the second location P2 by the first distance D1 on the second straight line 2402.

The electronic apparatus 100 may determine the third candidate location PT3 as the second target location, and the fourth candidate location PT4 as the third target location.

The electronic apparatus 100 may generate guide information to guide the first terminal device 200-1 to be placed on the first target location PT1, the second terminal device 200-2 to be placed on the second target location PT3, and the third terminal device 200-3 to be placed on the third target location PT4, and may provide the guide information.

FIG. 25 is an illustrations of an example target location of three terminal devices according to one or more embodiments.

First straight line 2501, first location P1, second location P2, first distance D1, first candidate location PT1, and second candidate location PT2 of FIG. 25 may correspond to the first straight line 2401, the first location P1, the second location P2, the first distance D1, the first candidate location PT1, and the second candidate location PT2 of FIG. 24, respectively. Redundant descriptions will be omitted.

According to one or more embodiments, the environment 2500 of FIG. 25 illustrates a situation in which the first terminal device 200-1, the second terminal device 200-2, and the third terminal device 200-3 are connected to the electronic apparatus 100. The electronic apparatus 100 may identify the number of terminal device 200 as three.

The electronic apparatus 100 may identify the first candidate location PT1 and the second candidate location PT2 that are distant from the second location P2 by the first distance D1 on the first straight line 2501.

The electronic apparatus 100 may prioritize a location that is further from the third location P3 among the plurality of candidate locations. The electronic apparatus 100 may determine the location PT1 that is further from the third location P3 between the first candidate location PT1 and the second candidate location PT2 as the first target location.

The electronic apparatus 100 may identify an imaginary second straight line 2502 perpendicular to a first straight line 2501 with reference to the first location P1. The electronic apparatus 100 may identify the third candidate location PT3 and the fourth candidate location PT4 that are distant from the first location P1 by the first distance D1 on the second straight line 2502.

The electronic apparatus 100 may determine the third candidate location PT3 as the second target location, and the fourth candidate location PT4 as the third target location.

The electronic apparatus 100 may generate guide information to guide the first terminal device 200-1 to be placed on the first target location PT1, the second terminal device 200-2 to be placed on the second target location PT3, and the third terminal device 200-3 to be placed on the third target location PT4, and may provide the guide information.

FIG. 26 is an illustration of an example controlling method of an electronic apparatus according to one or more embodiments.

An embodiment 2600 of FIG. 26 illustrates a situation in which the plurality of terminal device 200-1, 200-2, 200-3 of a plurality of users 10-1, 10-2, 10-3 are connected to the electronic apparatus 100. The electronic apparatus 100 may identify the number of terminal device 200 as three. The location of the electronic apparatus 100 may be the first location P1.

The electronic apparatus 100 may identify a location P2-1 of the first user 10-1. The electronic apparatus 100 may identify an imaginary first straight line 2601 connecting the first location P1 and the location P2-1. The electronic apparatus 100 may determine a first target location between the first location P1 and the location P2-1 along the imaginary first straight line 2601. The electronic apparatus 100 may determine the location PT1 that is distant from the location P2-1 by a threshold distance in the direction of the first location P1 on the first straight line 2601 as the first target location.

The electronic apparatus 100 may identify a location P2-2 of the second user 10-2. The electronic apparatus 100 may identify an imaginary second straight line 2602 connecting the first location P1 and the location P2-2. The electronic apparatus 100 may determine a second target location between the first location P1 and the second location P2-2 along the imaginary second straight line 2602. The electronic apparatus 100 may determine the location PT2 that is distant from the location P2-2 by a threshold distance in the direction of the first location P1 on the second straight line 2602 as the second target location.

The electronic apparatus 100 may identify a location P2-3 of the third user 10-3. The electronic apparatus 100 may identify an imaginary third straight line 2603 connecting the first location P1 and the locations P2-3. The electronic apparatus 100 may determine a third target location between the first location P1 and the locations P2-3 along the imaginary third straight line 2603. The electronic apparatus 100 may determine the location PT3 that is distant from the location P2-3 by a threshold distance in the direction of the first location P1 on the third straight line 2603 as the third target location.

The electronic apparatus 100 may generate guide information to guide the first terminal device 200-1 to be placed on the first target location PT1, the second terminal device 200-2 to be placed on the second target location PT3, and the third terminal device 200-3 to be placed on the third target location PT4, and may provide the guide information.

The threshold distance may vary depending on user setting.

According to various embodiments, a threshold ratio, not a threshold distance, may be applied. For example, the first target location may be determined such that ratio information DA:DB of distance DA from the location P2-1 to the specific location PT1 and distance DB from the specific location PT1 to the first location P1 is a threshold ratio (e.g., 1:4). The same calculation may be applied to the second target location and the third target location.

When a plurality of users are identified, the electronic apparatus 100 may perform an operation disclosed in the embodiment of FIG. 26. The electronic apparatus 100 may obtain a captured image via an image sensor (e.g., a camera) included in the sensor 121. The electronic apparatus 100 may identify whether a plurality of users are identified in the captured image. When a plurality of users are identified in the captured image, the electronic apparatus 100 may perform the operation disclosed in the embodiment of FIG. 26.

When obtaining a user input to operate in a preset mode, the electronic apparatus 100 may perform the operation disclosed in the embodiment of FIG. 26. The preset mode may include one of a low noise mode and a night mode. Upon receiving the user input to operate in the preset mode, the electronic apparatus 100 may generate audio setting for outputting an audio signal below a threshold size. The electronic apparatus 100 may transmit the audio setting for outputting the audio signal below the threshold size to each of the terminal devices 200-1, 200-2, and 200-3.

The threshold may vary depending on user setting.

When each of the terminal devices 200-1, 200-2, and 200-3 includes an ultrasonic speaker, the electronic apparatus 100 may generate audio setting to output an audio signal above each threshold frequency. The electronic apparatus 100 may transmit the audio setting for outputting the audio signal above the threshold frequency to each of the terminal devices 200-1, 200-2, and 200-3.

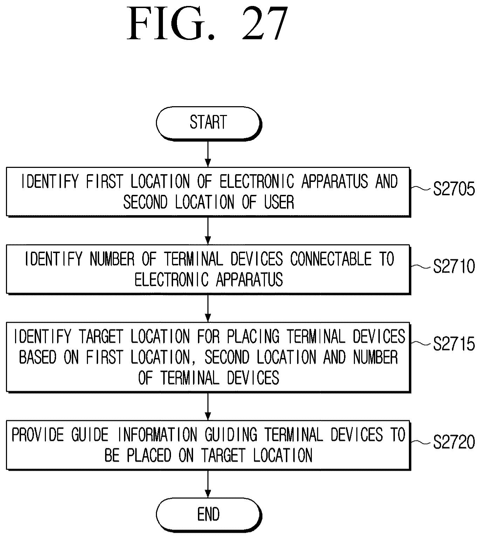

Referring to FIG. 27, an example controlling method of an electronic apparatus includes the operations of identifying a first location of the electronic apparatus, a second location of the user (S2705), identifying the number of terminal devices connectable to the electronic apparatus (S2710), identifying a target location for placing the terminal devices based on the first location, the second location, and the number of terminal devices (S2715), and providing guide information to guide the terminal devices to be placed on the target location (S2720).

The controlling method may further include, when the terminal device is placed on the target location, transmitting audio information including an audio signal to the terminal device for output by the terminal device, and outputting a projection image corresponding to the audio signal.

The operation of transmitting audio information may include, when the terminal device is placed on the target location, transmitting audio information including an audio signal and audio setting for outputting the audio signal at a preset audio volume to the terminal device.

The preset audio volume may be a first audio volume, the audio setting may be first audio setting, and the audio information may be first audio information, and the controlling method may include acquiring audio data recording an audio signal output from the terminal device, changing the first audio volume to a second audio volume based on the audio data, and transmitting second audio information including second audio setting for outputting the audio signal at the second audio volume to the terminal device.

The target location may be a first target location, the guide information may be first guide information, and the controlling method may include obtaining audio data recording an audio signal output from the terminal device, changing the first target location to a second target location based on the audio data, and providing second guide information guiding the terminal device to be placed on the second target location.

The operation of identifying the target location (S2715) may include, when the number of terminal devices is one, identifying an imaginary first straight line connecting the second location and the first location, and identifying a location distant from the second location by a first distance between the first distance and the second distance on the first straight line as the target location.

The operation of identifying the target location (S2715) may include identifying a third location of the projection area for outputting the projection image with reference to the first location, and when there are a plurality of candidate locations that are distant from the second location by the first distance on the first straight line, identifying the candidate location further from the third location among the plurality of candidate locations as the target location.

The operation of identifying the target location (S2715) may include, when the number of terminal devices is two, identifying an imaginary first straight line connecting the second location and the first location, identifying an imaginary second straight line perpendicular to the first straight line, and identifying a plurality of locations distant from the second location by a first distance between the first location and the second location on the second straight line as the target locations.

The controlling method may further include the operation of generating an audio signal corresponding to the target location and transmitting audio information including the audio signal to the terminal device, and the audio signal may be a multichannel audio signal.

The controlling method may further include generating audio setting corresponding to the target location and transmitting audio information including the audio setting to the terminal device, and the audio setting may be equalizer (EQ) setting.

According to one or more embodiment, an electronic apparatus may include memory storing one or more instructions, a communication interface and at least one processor operatively coupled to the memory and configured to execute the one or more instructions stored in the memory.

The one or more instructions, when executed by the at least one processor , may cause the electronic apparatus to: identify a second location of a user with reference to a first location of the electronic apparatus, identify one or more terminal devices connectable to the electronic apparatus, identify a target location to place the one or more terminal devices based on the first location, the second location, and the one or more terminal devices, and transmit, to the one or more terminal devices, one or more communication packets comprising guide information to guide placement of the one or more terminal devices on the target location.

The electronic apparatus may include a projector configured to output a projection image. The one or more instructions, when executed by the at least one processor, may cause the electronic apparatus to: based on the one or more terminal devices being placed on the target location, control the communication interface to transmit, to the one or more terminal devices, audio information comprising an audio signal that is output from the one or more terminal devices, and control the projector to output the projection image corresponding to the audio signal.

The one or more instructions, when executed by the at least one processor, may cause the electronic apparatus to: based on the one or more terminal devices being placed on the target location, control the communication interface to transmit, to the one or more terminal devices, the audio information comprising the audio signal and audio setting that causes the one or more terminal devices to output the audio signal at a preset audio volume.

The electronic apparatus may include a microphone. The preset audio volume may be a first audio volume, The audio setting may be a first audio setting. The audio information may be first audio information. The one or more instructions, when executed by the at least one processor, may cause the electronic apparatus to: obtain audio data recording the audio signal output from the one or more terminal devices through the microphone, change the first audio volume to a second audio volume based on the audio data, and control the communication interface to transmit, to the one or more terminal devices, second audio information including a second audio setting that causes the one or more terminal devices to output the audio signal at a second audio volume.

The electronic apparatus may include a microphone. The target location may be a first target location,

The guide information may be first guide information. The one or more instructions, when executed by the at least one processor, may cause the electronic apparatus to: obtain audio data recording the audio signal output from the one or more terminal devices through the microphone, change the first target location to a second target location based on the audio data, and transmit, to the one or more terminal devices, one or more communication packets comprising second guide information to guide the one or more terminal devices to be placed on the second target location.

The one or more instructions, when executed by the at least one processor, may cause the electronic apparatus to: based on there being one terminal device, identify an imaginary first straight line connecting the second location and the first location, and identify a location distant from the second location by a first distance between the first location and the second location within the imaginary first straight line as a target location.

The one or more instructions, when executed by the at least one processor, may cause the electronic apparatus to: identify, with reference to the first location, a third location of a projection area to output a projection image, and based on there being a plurality of candidate locations distant from the second location by the first distance within the imaginary first straight line, identify, as the target location, a candidate location having a distance that is farthest from the third location among the plurality of candidate locations.

The one or more instructions, when executed by the at least one processor, may cause the electronic apparatus to: based on there being two terminal devices, identify an imaginary first straight line connecting the second location and the first location, identify an imaginary second straight line perpendicular to the imaginary first straight line, and identify a plurality of locations distant from the second location by a first distance between the first location and the second location within the imaginary second straight line as target locations.

The one or more instructions, when executed by the at least one processor, may cause the electronic apparatus to: generate an audio signal corresponding to the target location, and control the communication interface to transmit, to the one or more terminal devices, audio information comprising the audio signal. The audio signal may be a multi-channel audio signal.

The one or more instructions, when executed by the at least one processor, may cause the electronic apparatus to: generate audio setting corresponding to the target location, and control the communication interface to transmit audio information including the audio setting to the one or more terminal devices. The audio setting may be Equalizer (EQ) setting.

The methods according to various embodiments of the present disclosure described above may be implemented in the form of an application that can be installed in the existing electronic apparatuses.

The methods according to various embodiments of the present disclosure described above may be implemented by software upgrade to the existing electronic apparatuses, or by hardware upgrade alone.

The various embodiments of the disclosure described above may also be performed through an embedded server provided in the electronic apparatus, or an external server of at least one of an electronic apparatus or a display device.

According to one or more embodiments, the above-described various embodiments may be implemented as software including instructions stored in machine-readable storage media, which can be read by machine (e.g.computer). The machine refers to a device that calls instructions stored in a storage medium, and can operate according to the called instructions, and the device may include an electronic apparatus according to the aforementioned embodiments. In case an instruction is executed by a processor, the processor may perform a function corresponding to the instruction by itself, or by using other components under its control. An instruction may include a code that is generated or executed by a compiler or an interpreter. The machine-readable storage medium may be provided in a form of a non-transitory storage medium. In one or more examples, the term "non-transitory" means that the storage medium is tangible without including a signal, and does not distinguish whether data are semi-permanently or temporarily stored in the storage medium.

According to one or more embodiments, the above-described methods according to the various embodiments may be included and provided in a computer program product. The computer program product may be traded as a product between a seller and a purchaser. The computer program product may be distributed in a form of a storage medium (for example, a compact disc read only memory (CD-ROM)) that may be read by the machine or online through an application store (for example, PlayStoreTM). In case of the online distribution, at least a portion of the computer program product may be at least temporarily stored in a storage medium such as a memory of a server of a manufacturer, a server of an application store, or a relay server or be temporarily generated.

In addition, the components (for example, modules or programs) according to various embodiments described above may include a single entity or a plurality of entities, and some of the corresponding sub-components described above may be omitted or other sub-components may be further included in the various embodiments. In one or more examples, some components (e.g., modules or programs) may be integrated into one entity and perform the same or similar functions performed by each corresponding component prior to integration. Operations performed by the modules, the programs, or the other components according to the diverse embodiments may be executed in a sequential manner, a parallel manner, an iterative manner, or a heuristic manner, or at least some of the operations may be performed in a different order or be omitted, or other operations may be added.

Although preferred embodiments of the present disclosure have been shown and described above, the disclosure is not limited to the specific embodiments described above, and various modifications may be made by one of ordinary skill in the art without departing from the spirit of the disclosure as claimed in the claims, and such modifications are not to be understood in isolation from the technical ideas or prospect of the disclosure.

## Claims

1. An electronic apparatus comprising
memory storing one or more instructions;
a communication interface; and
a projector configured to output a projection image; and
at least one processor operatively coupled to the memory and configured to execute the one or more instructions stored in the memory,
wherein the at least one processor is configured to
identify a second location of a user with reference to a first location of the electronic apparatus;
identify the number of terminal devices connectable to the electronic apparatus; identify a target location to place the terminal devices based on the first location, the second location and the number of terminal devices; and
provide guide information to guide the terminal devices to be placed on the target location.

2. The electronic apparatus as claimed in claim 1, further comprising:
wherein the at least one processor is configured to
based on the terminal devices being placed on the target location, control the communication interface to transmit audio information including an audio signal to be output from the terminal devices to the terminal devices; and
control the projector to output a projection image corresponding to the audio signal.

3. The electronic apparatus as claimed in claim 2,
wherein the at least one processor is configured to
based on the terminal devices being placed on the target location, control the communication interface to transmit the audio information including the audio signal and audio setting to output the audio signal at a preset audio volume to the terminal devices.

4. The electronic apparatus as claimed in claim 3, further comprising
a microphone,
wherein the preset audio volume is a first audio volume;
wherein the audio setting is a first audio setting;
wherein the audio information is first audio information; and
wherein the at least one processor is configured to
obtain audio data recording the audio signal output from the terminal devices through the microphone;
change the first audio volume to a second audio volume based on the audio data; and
control the communication interface to transmit second audio information including second audio setting to output the audio signal at a second audio volume to the terminal devices.

5. The electronic apparatus as claimed in claim 2, further comprising
a microphone,
wherein the target location is a first target location;
wherein the guide information is first guide information; and
wherein the at least one processor is configured to
obtain audio data recording the audio signal output from the terminal devices through the microphone;
change the first target location to a second target location based on the audio data; and
provide second guide information to guide the terminal devices to be placed on the second target location.

6. The apparatus as claimed in claim 1, wherein the at least one processor is configured to
based on there being one terminal devices, identify an imaginary first straight line connecting the second location and the first location; and
identify a location distant from the second location by a first distance between the first location and the second location within the first straight line as a target location.

7. The apparatus as claimed in claim 6, wherein the at least one processor is configured to
identify, with reference to the first location, a third location of a projection area to output a projection image; and
based on there being a plurality of candidate locations distant from the second location by the first distance within the first straight line, identify a candidate location having a distance that is farthest from the third location among the plurality of candidate locations as the target location.

8. The electronic apparatus as claimed in claim 1, wherein the at least one processor is configured to
based on there being two terminal devices, identify an imaginary first straight line connecting the second location and the first location;
identify an imaginary second straight line perpendicular to the first straight line; and
identify a plurality of locations distant from the second location by the first distance between the first location and the second location within the second straight line as target locations.

9. The electronic apparatus as claimed in claim 1, wherein the at least one processor is configured to
generate an audio signal corresponding to the target location; and
control the communication interface to transmit audio information including the audio signal to the terminal devices,
wherein the audio signal is a multi-channel audio signal.

10. The electronic apparatus as claimed in claim 1, wherein the at least one processor is configured to
generate audio setting corresponding to the target location; and
control the communication interface to transmit audio information including the audio setting to the terminal devices,
wherein the audio setting is Equalizer (EQ) setting.

11. A controlling method of an electronic apparatus, the method comprising
identifying a second location of a user with reference to a first location of the electronic apparatus;
identifying the number of terminal devices connectable to the electronic apparatus;
identifying a target location to place the terminal devices based on the first location, the second location and the number of terminal devices; and
providing guide information to guide the terminal devices to be placed on the target location.

12. The method as claimed in claim 11, further comprising
based on the terminal devices being placed on the target location, transmitting audio information including an audio signal to be output from the terminal devices to the terminal devices; and
outputting a projection image corresponding to the audio signal.

13. The method as claimed in claim 12, wherein the transmitting the audio information comprises
based on the terminal devices being placed on the target location, transmitting the audio information including the audio signal and audio setting to output the audio signal at a preset audio volume to the terminal devices.

14. The method as claimed in claim 13, wherein the preset audio volume is a first audio volume;
wherein the audio setting is a first audio setting;
wherein the audio information is first audio information; and
wherein the controlling method comprises
obtaining audio data recording the audio signal output from the terminal devices;
changing the first audio volume to a second audio volume based on the audio data; and
transmitting second audio information including second audio setting to output the audio signal at a second audio volume to the terminal devices.

15. The method as claimed in claim 12, wherein the target location is a first target location;
wherein the guide information is first guide information; and
wherein the controlling method comprises
obtaining audio data recording the audio signal output from the terminal devices;
changing the first target location to a second target location based on the audio data; and
providing second guide information to guide the terminal devices to be placed on the second target location.
